# EUROPÄISCHE PATENTSCHRIFT

(11) **EP 3 515 757 B1**
(45) Veröffentlichungstag und Bekanntmachung des Hinweises auf die Patenterteilung: **24.03.2021**
(21) Anmeldenummer: 17748490.4
(22) Anmeldetag: 03.08.2017
(51) Int. Cl.: B60N 2/68, B60N 2/36

(54) **LASTPFADOPTIMIERTE HYBRID-TRAGSTRUKTUR**
LOAD-PATH-OPTIMIZED HYBRID CARRYING STRUCTURE
STRUCTURE PORTEUSE HYBRIDE OPTIMISÉE EN TERMES DE CHEMIN DE CHARGE

(30) Priorität: 20.09.2016 DE 102016217952
(43) Veröffentlichungstag der Anmeldung: 31.07.2019
(73) Patentinhaber: Volkswagen Aktiengesellschaft, 38440 Wolfsburg (DE); Sitech Sitztechnik GmbH, 38442 Wolfsburg (DE)
(72) Erfinder: DREESSEN, Philipp, 70193 Stuttgart (DE); GERDES, Arne, 38173 Sickte (DE); HUININK, Stefan, 38165 Lehre (DE); GADEK, Slawomir, 67-222 Jerzmanowa (PL)
(74) Vertreter: Gulde & Partner
(86) Internationale Anmeldenummer: PCT/EP2017/069718
(87) Internationale Veröffentlichungsnummer: WO 2018/054593

(56) Entgegenhaltungen:
- WO-A1-2016/113358
- WO-A2-2013/127972
- DE-A1-102007 041 222
- DE-A1-102008 038 851
- DE-U1-202008 015 401

## Beschreibung

Die Erfindung betrifft eine Hybrid-Tragstruktur für ein Rückenlehnenteil eines Fahrzeugsitzes oder einer Rücksitzbank, die aus einer Metallstruktur und einer Kunststoffstruktur ausgebildet ist.

Die Druckschrift EP 1 262 362 A1 offenbart eine klappbare Rückenlehne für einen Rücksitz eines Kraftfahrzeugs, wobei die Rückenlehne über ihre Lehnenbreite gesehen durchgehend ausgebildet und als Strangpresshohlprofil mit wenigstens einer Profilkammer ausgebildet ist, wobei die Strangpressrichtung des Strangpressprofils in Richtung der Lehnenhöhe verläuft.

Die Druckschrift EP 1 564 067 A1 beschreibt eine Baugruppe für einen Kraftfahrzeuginnenraum, umfassend eine Sitzlehne mit einem ersten Abschnitt und einem zweiten Abschnitt, der getrennt von dem ersten Abschnitt ausgebildet ist und mit dem ersten Abschnitt über mindestens ein Gelenk verbunden ist, um eine Sitzlehne zu bilden. Dabei ist der erste Abschnitt oder der zweite Abschnitt aus einem geformten Kunststoff gefertigt und weist ferner mehrere einzelne integrierte Verstärkungsstrukturen auf, um ein Muster aus integrierten Verstärkungsstrukturen zu bilden. Die Baugruppe umfasst zudem eine Befestigungsbaugruppe zum Verankern der Sitzlehne an mindestens einem Körper im zweiten Abschnitt des Kraftfahrzeugs, wobei der erste Abschnitt und der zweite Abschnitt im Abstand voneinander angeordnet sind, um dazwischen mehrere offene Innenräume zu bilden, die als Entlüftungsöffnungen dienen.

Außerdem wird in der Druckschrift EP 2 495 125 A1 ein Fahrzeugsitz erläutert, der eine X-förmige Rippe aufweist, die mit einem Rahmen einer Rücksitzlehne verbunden ist. Die durch die X-förmige Rippe gebildeten Verstärkungsabschnitte erstrecken sich linear zu mehreren Lastwirkungspunkten, wodurch die in die Rücksitzlehne einwirkenden Kräfte auch über die Verstärkungsabschnitte aufgenommen werden.

Ferner beschreibt die Druckschrift WO 2011/036185 A1 ein Verfahren zur Herstellung einer Fahrzeugsitzstruktur. Es ist vorgesehen, dass an zumindest einer Rückenschale eine Rahmenstruktur und Versteifungsrippen und Absorptionsrippen angeformt werden, wobei in oder an der Rückenschale und/oder der Rahmenstruktur Einlegebauteile angeordnet werden.

Außerdem wird in der Druckschrift EP 2 233 352 A1 eine Tragstruktur für eine Rückenlehne eines Sitzes in einem Kraftfahrzeug aus einem Polymermaterial offenbart, wobei an mindestens einer sich von oben nach unten erstreckenden Seite der Tragstruktur ein Hohlprofil ausgebildet ist, das durch ein kombiniertes Gasinnendruck- und Wasserinjektionsverfahren gefertigt wird. Zur Stabilisierung sind zwei ausgebildete Hohlprofile als diagonal verlaufende sich kreuzende Querrippen ausgebildet.

Schließlich wird in der Druckschrift DE 10 2007 041222 A1 ein Fahrzeugsitz-Lehnenrahmen mit einem Stahlrahmenbereich und einem Kunststoff-Rahmensubstrat offenbart.

Die Sitzstrukturen basieren zumeist auf gewichtsoptimierten Stahlkonzepten, wobei zur Reduzierung des Bauteilgewichts zumindest teilweise Leichtbaumaterialien zum Einsatz kommen. Das Potential der zu erzielenden Reduzierung unter Berücksichtigung ausreichender Stabilität ist dabei weitestgehend ausgeschöpft. Zudem werden bei den bekannten Lösungen zumeist viele spezifische den jeweiligen Zweck erfüllende Einzelteile entwickelt, die in nachteiliger Weise in einer Vielzahl von Zusammenbauoperationen beziehungsweise Fügeoperationen zu einer Tragstrukturstruktur zusammengefügt werden müssen.

Bekannt ist es, Kunststoffteile in die Tragstruktur zu integrieren, wie beispielsweise die Druckschrift EP 1 564 067 A1 beschreibt.

Die Aufgabe der vorliegenden Erfindung ist es, eine Hybrid-Tragstruktur für eine Rückenlehne eines Sitzes in einem Kraftfahrzeug bereitzustellen, die sich auf einfache Weise herstellen lässt, und die bei geringem Bauteilgewicht eine ausreichende und auf die in die Tragstruktur einwirkenden Kräfte abgestimmte Stabilität aufweist.

Ausgangspunkt der Erfindung ist eine Hybrid-Tragstruktur für ein Rückenlehnenteil eines Fahrzeugsitzes oder einer Rücksitzbank, die aus einer Metallstruktur und einer Kunststoffstruktur ausgebildet ist, wobei die Metallstruktur mindestens ein zwischen zwei Seitenholmprofilen der Hybrid-Tragstruktur angeordnetes Verbindungsprofil aufweist. Erfindungsgemäß ist vorgesehen, dass das Verbindungsprofil gemeinsam mit einer Zentralrippe einer als Kunststoffstruktur ausgebildeten Netzstruktur einem lastpfadoptimierten Hauptkraftfluss folgt, die unter Berücksichtigung einer in mindestens einem angenommenen Lastfall an der Hybrid-Tragstruktur angreifenden Kraft zwischen zwei Anbindungspunkten des Verbindungsprofils an den Seitenholmprofilen verläuft.

Diese Ausgestaltung ist von besonderem Vorteil, da die Stabilität der Hybrid-Tragstruktur durch einfache Mittel, nämlich durch ein Verbindungsprofil zwischen den Seitenholmprofilen und eine Zentralrippe einer Netzstruktur, die zwischen den Seitenholmprofilen ausgebildet ist, erreicht wird.

Die Zentralrippe der Netzstruktur und das Verbindungsprofil werden strukturabhängig in vorteilhafter Weise nach einer vorhergehenden Topologie-Optimierung angeordnet, sodass erfindungsgemäß auf diese Weise auf verschiedene Tragstrukturen variabel hinsichtlich der Anordnung der Zentralrippe beziehungsweise des Verbindungsprofils reagiert werden kann.

Erfindungsgemäß sind die Metallstruktur und die Kunststoffstruktur in einem Spritzgießverfahren zu der Hybrid-Tragstruktur verbunden. Dieses Verfahren ermöglicht in vorteilhafter Weise eine variable Ausgestaltung der Geometrie sowohl der Metallstruktur als auch der Kunststoffstruktur, wobei die Spritzgießform einfach an die gewünschte Metallstruktur und die gewünschte Kunststoffstruktur angepasst werden kann, und ferner durch die Formgebung der jeweiligen Form in einfacher Weise eine komplexe geometrische Kunststoffstruktur hergestellt werden kann.

Erfindungsgemäß ist die Metallstruktur ein Zusammenbauteil aus mehreren metallischen Bauteilen, wobei die mehreren Bauteile zunächst zu dem metallischen Zusammenbauteil zusammengeführt und in dem Spritzgießverfahren über die einteilig ausgebildete Kunststoffstruktur miteinander verbunden sind. Diese Ausgestaltung ist von Vorteil, da die metallischen Bauteile lediglich in einem Arbeitsschritt zusammengeführt werden müssen, wonach die Verbindung der mehreren metallischen Bauteile schließlich durch den in die Spritzgießform eingebrachten Kunststoff erfolgt, wobei gleichzeitig ein einteiliges Kunststoffteil gebildet wird, welches hohen Anforderungen an die Stabilität genügt.

Bevorzugt ist die Netzstruktur der Kunststoffstruktur eine unregelmäßige Spinnennetz-Struktur, die sowohl die Zentralrippe und von der Zentralrippe ausgehend im Wesentlichen horizontale Rippen und im Wesentlichen vertikale Rippen umfasst, die über Kreuzungspunkte miteinander verbunden sind. In vorteilhafter Weise hat sich herausgestellt, dass die Spinnennetz-Struktur mit der entlang der Hauptlastlinie ausgebildeten Zentralrippe eine hohe Stabilität aufweist, die unter Verwendung geringen Materialeinsatzes bewirkbar ist, wodurch die Zielstellung der Reduzierung des Gewichtes der Hybrid-Tragstruktur erreicht wird.

Dabei ist vorgesehen, dass sich eine aufgespannte Ebene der Spinnennetz-Struktur zwischen den seitlichen Seitenholmprofilen der Hybrid-Tragstruktur und zwischen den zu der Kunststoffstruktur gehörenden Kopfstützen-Aufnahmen an einem oberen Ende der Hybrid-Tragstruktur bis zu einer horizontalen Drehachse an einem unteren Ende der Hybrid-Tragstruktur erstreckt. Die Stabilisierung der Hybrid-Tragstruktur bei geringem Materialeinsatz erfolgt in vorteilhafter Weise durch die sich über die gesamte zwischen den seitlich in Seitenholmprofilen erstreckende Spinnennetz-Struktur.

Ferner ist vorgesehen, dass die Spinnennetz-Struktur der Kunststoffstruktur in vorteilhafter Weise eine erste und zweite Spinnennetz-Teilstruktur aufweist, die auf einer Rückseite der Hybrid-Tragstruktur durchgehend und auf einer Vorderseite der Hybrid-Tragstruktur unterbrochen ausgebildet sind. Durch diese Ausgestaltung kann vorteilhaft darauf reagiert werden, dass die Lastfallanforderungen in verschiedenen Bereichen der Spinnennetz-Struktur unterschiedlich sind, wie in der Beschreibung näher erläutert wird.

Vorgesehen ist einerseits, dass sich eine aufgespannte Ebene der ersten Spinnennetz-Teilstruktur zwischen den seitlichen Seitenholmprofilen der Hybrid-Tragstruktur und zwischen zu der Kunststoffstruktur gehörenden Kopfstützen-Aufnahmen an einem oberen Ende der Hybrid-Tragstruktur bis zu einer horizontalen Achse erstreckt, die zwischen dem oberen und unteren Ende der Hybrid-Tragstruktur verläuft. Erfindungsgemäß ergibt sich auslegungsbedingt die horizontale Achse, die zwischen den Spinnennetz-Teilstrukturen verläuft, wobei die Anordnung der horizontalen Achse in vorteilhafter Weise je nach der vorher durchgeführten Topologie-Optimierung innerhalb der Hybrid-Tragstruktur erfolgt.

Vorgesehen ist andererseits, dass sich eine aufgespannte Ebene der zweiten Spinnennetz-Teilstruktur zwischen den seitlichen Seitenholmprofilen der Hybrid-Tragstruktur und zwischen der horizontalen Achse zwischen dem oberen und unteren Ende der Hybrid-Tragstruktur und der horizontalen Drehachse an dem unteren Ende der Hybrid-Tragstruktur erstreckt. Für die zweite Spinnennetz-Teilstruktur ergibt sich in vorteilhafter Weise ein Bereich der Hybrid-Tragstruktur, der gemäß der nachfolgenden Beschreibung spezifisch für einen bestimmten Lastfall (Ladegut-Lastfall) ausgelegt werden kann.

In einer bevorzugten in der Beschreibung näher erläuterten Ausgestaltung ist vorgesehen, dass innerhalb der durch die zweite Spinnennetz-Teilstruktur aufgespannten Ebene ein metallischer Einleger zwischen den seitlichen Seitenholmprofilen angeordnet ist, der die zweite Spinnennetz-Teilstruktur in eine vorderseitige und eine rückseitige zweite Spinnennetz-Teilstruktur trennt. Die vorteilhafte Bedeutung des metallischen Einlegers innerhalb der zweiten Spinnennetz-Teilstruktur wird ebenfalls in der Beschreibung detailliert erläutert.

Schließlich ist vorgesehen, dass das zwischen den Seitenholmprofilen angeordnete Verbindungsprofil als ein C-Profil ausgebildet ist, welches zwei gegenüberliegende Profilschenkel aufweist, die sich zur Rückseite der Hybrid-Tragstruktur erstrecken, zwischen denen eine weitere Netzstruktur als eine Kreuz-Netzstruktur ausgebildet ist, die aus sich regelmäßig oder unregelmäßig kreuzenden Rippen ausgebildet ist, die im Wesentlichen dreieckige Waben oder rechteckige Waben, insbesondere quadratische oder rhombische Waben mit Kreuzungspunkten bilden. Durch diese weitere Netzstruktur besteht in vorteilhafter Weise die Möglichkeit, die Hybrid-Tragstruktur auf einfache Weise sehr stabil auszubilden. Das Verbindungsprofil folgt innerhalb der Hybrid-Tragstruktur hinsichtlich seiner Ausrichtung der Hauptlastlinie, sodass auch die Kreuz-Netzstruktur innerhalb des Verbindungsprofils der Hauptlastlinie folgt, wodurch das Verbindungsprofil hinsichtlich seiner Wandstärken im Vergleich zu aus dem Stand der Technik bekannten Verbindungsprofilen mit geringeren Wandstärken ausgebildet werden kann, sodass sich bei zumindest gleicher oder sogar höherer Stabilität das Gewicht der Hybrid-Tragstruktur reduzieren lässt.

Die Seitenholmprofile sind als C-Profile ausgebildet, welche zwei gegenüberliegende Profilschenkel aufweisen, die von der Hybrid-Tragstruktur seitlich abstehen, wobei zwischen den Profilschenkeln eine weitere Netzstruktur, als Kreuz-Netzstruktur ausgebildet ist, die aus sich regelmäßig oder unregelmäßig kreuzenden Rippen ausgebildet ist, die im Wesentlichen dreieckige Waben oder rechteckige Waben, insbesondere quadratische oder rhombische Waben mit Kreuzungspunkten bilden. Auch diese Ausgestaltung trägt zu der Stabilisierung der Hybrid-Tragstruktur unter Verwendung von weniger Material für die Ausgestaltung der Seitenholmprofile bei, sodass sich in vorteilhafter Weise eine leichte und stabile hybride Tragstruktur ausbilden lässt.

Vorgesehen ist zudem bevorzugt, dass die Kunststoffstruktur ein Polsterstruktur-Aufnahmeelement umfasst, welches seitlich des Polsterstruktur-Aufnahmeelementes eine weitere Netzstruktur, als Dreieck-Netzstruktur aufweist, die aus regelmäßig oder unregelmäßig abgewinkelten Rippen ausgebildet ist, die im Wesentlichen dreieckige Waben mit Kreuzungspunkten bilden. In vorteilhafter Weise können spezielle Elemente, wie beispielsweise das Polsterstruktur-Aufnahmeelement innerhalb der Kunststoffstruktur vorgesehen und mittels der Netzstrukturen stabilisiert werden.

Außerdem ist vorgesehen, dass die Metallstruktur ein Funktionselement, insbesondere einen metallischen Profildraht mit einer Auskragung aufweist, sodass eine Polsterstruktur an dem aus Kunststoffstruktur ausgebildeten Polsterstruktur-Aufnahmeelement und der Auskragung des metallischen Profildrahtes befestigbar ist. Hier besteht der erfindungswesentliche Vorteil darin, dass der metallische Profildraht in die Spritzgießform einfach eingelegt werden kann, wonach das Befüllen der jeweiligen Form mit Kunststoff die anderen metallischen Bauteile über die einteilige Kunststoffstruktur mit dem metallischen Profildraht verbindet.

Bevorzugt ist ferner eine Ausgestaltung bei der metallische Aufnahmehülsen in den Seitenholmprofilen der Hybrid-Tragstruktur angeordnet sind, die mit der einteiligen Kunststoffstruktur fest verbunden sind, wobei die Kunststoffstruktur Umspritzungen der Aufnahmehülsen aufweist, die jeweils seitlich mit einer weiteren Netzstruktur als Kreissegment-Netzstruktur versehen sind, die aus sich von der Drehachse der Aufnahmehülsen unregelmäßig oder regelmäßig strahlenförmig abgehenden Rippen ausgebildet wird, wodurch die Kreissegment-Netzstruktur kreissegmentförmige Waben ausbildet. Der Vorteil dieser Lösung besteht darin, dass metallische Aufnahmehülsen vorgesehen werden können, die mit Kunststoff umspritzt werden, wodurch eine komplexe Hybrid-Tragstruktur in einfacher Weise herstellbar ist.

Dieser Vorteil gilt auch für die Metallstruktur der Hybrid-Tragstruktur, bei der in bevorzugter Ausgestaltung ein metallisches Kopfprofil mit einer Umspritzung aus Kunststoff als Teil der Kunststoffstruktur versehen wird.

Vorgesehen ist in vorteilhafter Weise, dass die Kunststoffstruktur eine Grundplatte und/oder eine Kopfstützen-Aufnahme umfasst, welche als Teile der Kunststoffstruktur ausgebildet werden, wodurch deutlich wird, dass sich spezifische Lösungen in einfacher Weise in die Hybrid-Tragstruktur integrieren lassen, wobei weitere Details in der nachfolgenden Beschreibung erläutert werden.

Vorgesehen ist ferner, dass die Kunststoffstruktur in einem vorgebbaren Bereich mindestens eine Netzstruktur aufweist, die auf einer insassenabgewandten Seite der Hybrid-Tragstruktur mindestens eine energieabsorbierende Opferrippe aufweist, die unter Berücksichtigung einer in mindestens einem angenommenen Lastfall (Ladegut-Lastfall) an der Hybrid-Tragstruktur angreifenden Kraft deformiert, wodurch in dem angenommenen Lastfall ein Brechen der Kunststoffstruktur außerhalb des mindestens einen vorgebbaren Bereiches der Kunststoffstruktur vermieden wird.

In vorteilhafter Weise ist dadurch sichergestellt, dass beispielsweise in einem angenommenen Frontcrash, bei dem Ladegut auf die Hybrid-Tragstruktur auftrifft, durch die angeordneten/eingebrachten Opferrippen auf der insassenzugewandten Seite keine Kunststoffteile der Kunststoffstruktur der Hybrid-Tragstruktur brechen können, da durch die Opferrippen Aufschlagenergie definiert abgebaut wird.

In bevorzugter Ausgestaltung der Erfindung ist vorgesehen, dass die Netzstruktur mit der mindestens einen Opferrippe die Spinnennetz-Struktur ist, die die erste und die zweite Spinnennetz-Teilstruktur aufweist. In vorteilhafter Weise ist die Spinnennetz-Struktur mit der mindestens einen Opferrippe gemäß den Anforderungen des Ladegut-Lastfalls in der relevanten zweiten Spinnennetz-Teilstruktur angeordnet.

In bevorzugter Ausgestaltung der Erfindung ist vorgesehen, dass sich die aufgespannte Ebene der Spinnennetz-Struktur mit der mindestens einen Opferrippe zwischen den seitlichen Seitenholmprofilen der Hybrid-Tragstruktur und zwischen den zu der Kunststoffstruktur gehörenden Kopfstützen-Aufnahmen an dem oberen Ende der Hybrid-Tragstruktur bis zu der horizontalen Drehachse an dem unteren Ende der Hybrid-Tragstruktur erstreckt. In vorteilhafter Weise lässt sich in Abhängigkeit der im Beschreibungsteil erläuterten Topologie-Optimierung festlegen, innerhalb welchen Bereichs die zweite Spinnennetz-Teilstruktur angeordnet werden soll.

In bevorzugter Ausgestaltung der Erfindung ist vorgesehen, dass sich die aufgespannte Ebene der ersten Spinnennetz-Teilstruktur zwischen den seitlichen Seitenholmprofilen der Hybrid-Tragstruktur und zwischen zu der Kunststoffstruktur gehörenden Kopfstützen-Aufnahmen an dem oberen Ende der Hybrid-Tragstruktur bis zu der horizontalen Achse erstreckt, die zwischen dem oberen und unteren Ende der Hybrid-Tragstruktur verläuft. Im Ergebnis der Topologie-Optimierung ist die erste Spinnennetz-Teilstruktur in dem oberen Bereich der Hybrid-Tragstruktur ausgebildet, wodurch in vorteilhafter Weise auf spezifische Anforderungen im oberen Bereich der Hybrid-Tragstruktur reagiert werden kann.

In bevorzugter Ausgestaltung der Erfindung ist vorgesehen, dass sich die aufgespannte Ebene der zweiten Spinnennetz-Teilstruktur zwischen den seitlichen Seitenholmprofilen der Hybrid-Tragstruktur und zwischen einer horizontalen Achse zwischen dem oberen und unteren Ende der Hybrid-Tragstruktur und der horizontalen Drehachse an dem unteren Ende der Hybrid-Tragstruktur erstreckt. Im Ergebnis der Topologie-Optimierung ist die zweite Spinnennetz-Teilstruktur in einem unteren Bereich der Hybrid-Tragstruktur ausgebildet, wodurch in vorteilhafter Weise auf spezifische Anforderungen im unteren Bereich der Hybrid-Tragstruktur reagiert werden kann.

Dabei ist bevorzugt innerhalb der durch die zweite Spinnennetz-Teilstruktur aufgespannten Ebene der metallische Einleger zwischen den seitlichen Seitenholmprofilen angeordnet, der die zweite Spinnennetz-Teilstruktur in die vorderseitige und die rückseitige zweite Spinnennetz-Teilstruktur trennt, wobei die mindestens eine Opferrippe in der rückseitigen zweiten Spinnennetz-Teilstruktur ausgebildet ist. Der Einleger ist von besonderem Vorteil, da er die insassenzugewandte Seite der Hybrid-Tragstruktur vor im Lastfall gegebenenfalls brechenden Kunststoffteilen schützt, wie im Beschreibungsteil näher erläutert ist.

In bevorzugter Ausgestaltung der Erfindung wird die erste und zweite Spinnennetz-Teilstruktur auf der Rückseite der Hybrid-Tragstruktur durchgehend und auf der Vorderseite der Hybrid-Tragstruktur unterbrochen ausgebildet. Hierdurch wird deutlich, dass in vorteilhafter Weise auf bestimmte Vorkehrungen bei der Ausbildung der Hybrid-Tragstruktur reagiert werden kann, wobei im Beschreibungsteil erläutert ist, weshalb die Spinnennetz-Struktur auf der Vorderseite der Hybrid-Tragstruktur unterbrochen ist.

Ferner ist vorgesehen, dass das zwischen den Seitenholmprofilen angeordnete metallische Verbindungsprofil der Metallstruktur als C-Profil ausgebildet ist, welches zwei gegenüberliegende Profilschenkel aufweist, die sich zur Rückseite der Hybrid-Tragstruktur erstrecken, zwischen denen eine die mindestens eine Opferrippe aufweisende weitere Netzstruktur ausgebildet ist. Diese vorteilhafte Ausgestaltung ermöglicht auch eine Anordnung mindestens einer Opferrippe im Bereich der ersten Spinnennetz-Teilstruktur, da das Verbindungsprofil der Metallstruktur innerhalb der ersten Spinnennetz-Teilstruktur angeordnet ist. Das Verbindungsprofil bewirkt somit in vorteilhafter Weise den Effekt, dass es zur Stabilisierung der Hybrid-Tragstruktur beiträgt, wobei in dem Hohlraum des C-Profils eine Netzstruktur ausbildet werden kann, die mindestens eine Opferrippe aufweist.

Vorgesehen ist schließlich, dass die weitere Netzstruktur als Kreuz-Netzstruktur ausgebildet ist, die aus sich regelmäßig oder unregelmäßig kreuzenden Rippen ausgebildet ist, die im dreieckige Waben oder rechteckige Waben, insbesondere quadratische oder rhombische Waben mit Kreuzungspunkten bilden. Diese Kreuz-Netzstruktur wurde aufgrund der Topologie-Optimierung ausgewählt, da sie einen guten Kompromiss zwischen der Stabilität des Verbindungsprofils und der Möglichkeit der Anordnung der mindestens einen Opferrippe darstellt.

Die Erfindung wird nachfolgend in einem Ausführungsbeispiel anhand der zugehörigen Zeichnungen erläutert. Es zeigen:
- Figur 1A: eine Rücksitzbank in einer perspektivischen Vorderansicht schräg von vorn mit einer nach unten auf ein Sitzteil der Rücksitzbank geklappten Durchladeeinrichtung;
- Figur 1B: die Rücksitzbank in einer perspektivischen Rückansicht schräg von hinten mit der nach oben zwischen zwei Rückenlehnen der Rücksitzbank geklappten Durchladeeinrichtung;
- Figur 2: eine Tragstruktur der Durchladeeinrichtung ohne die angrenzenden Komponenten der Rücksitzbank 100 gemäß den Figuren 1A, 1B;
- Figur 3A: eine Draufsicht auf eine Metallstruktur der aus der Metallstruktur und der Kunststoffstruktur bestehenden erfindungsgemäßen Hybrid-Tragstruktur 10;
- Figur 3B: die Metallstruktur in einer Rückansicht, wobei die Metallstruktur gegenüber der Figur 3A um eine gedachte vertikale Drehachse um 180° gedreht ist;
- Figur 3C: die Metallstruktur 10M in einer Seitenansicht, wobei die Metallstruktur gegenüber der Figur 3A um die gedachte vertikale Drehachse um 90° nach links gedreht ist;
- Figur 3D: die Metallstruktur 10M in einer Seitenansicht, wobei die Metallstruktur gegenüber der Figur 3A um die gedachte vertikale Drehachse um 90° nach rechts gedreht ist;
- Figur 3E: die Metallstruktur in einer Unteransicht, wobei ein Kopfprofil der Metallstruktur gegenüber der Figur 3A um eine gedachte horizontale Drehachse um 90° in die Blattebene hineingedreht ist;
- Figur 3F: die Metallstruktur in einer Draufsicht, wobei das Kopfprofil der Metallstruktur gegenüber der Figur 3A um eine gedachte horizontale Drehachse um 90° aus der Blattebene herausgedreht ist;
- Figur 4A: eine perspektivische Vorderansicht der Metallstruktur gemäß Figur 3A;
- Figur 4B: eine perspektivische Rückansicht der Metallstruktur gemäß Figur 3B;
- Figur 5A: eine Draufsicht auf die aus der Metallstruktur und der Kunststoffstruktur bestehenden Hybrid-Tragstruktur;
- Figur 5B: die Hybrid-Tragstruktur in einer Rückansicht, wobei die Hybrid-Tragstruktur gegenüber der Figur 5A um eine gedachte vertikale Drehachse um 180° gedreht ist;
- Figur 5C: die Hybrid-Tragstruktur in einer Seitenansicht, wobei die Hybrid-Tragstruktur gegenüber der Figur 5A um die gedachte vertikale Drehachse um 90° nach links gedreht ist;
- Figur 5D: die Hybrid-Tragstruktur in einer Seitenansicht, wobei die Hybrid-Tragstruktur gegenüber der Figur 5A um die gedachte vertikale Drehachse um 90° nach rechts gedreht ist;
- Figur 5E: die Hybrid-Tragstruktur in einer Unteransicht, wobei das Kopfprofil der Hybrid-Tragstruktur gegenüber der Figur 5A um eine gedachte horizontale Drehachse um 90° in die Blattebene hineingedreht ist;
- Figur 5F: die Hybrid-Tragstruktur in einer Draufsicht, wobei das Kopfprofil der Hybrid-Tragstruktur gegenüber der Figur 5A um eine gedachte horizontale Drehachse um 90° aus der Blattebene herausgedreht ist;
- Figur 6: eine vergrößerte Darstellung eines zweiten Seitenholmprofils gemäß Figur 5C;
- Figur 7A: eine perspektivische Vorderansicht der Hybrid-Tragstruktur gemäß Figur 5A;
- Figur 7B: eine perspektivische Rückansicht der Hybrid-Tragstruktur gemäß Figur 5B, wobei die Hybrid-Tragstruktur gegenüber der Figur 7A um eine gedachte vertikale Drehachse um 180° gedreht ist;
- Figur 8: die Hybrid-Tragstruktur gemäß Figur 7A in einer vergrößerten perspektivischen Vorderansicht;
- Figur 9A: eine perspektivische Rückseite der Hybrid-Tragstruktur mit einem auf eine insassenabgewandte Seite auftreffenden Ladegut;
- Figur 9B: einen Schnitt A-A gemäß Figur 9A durch die Hybrid-Tragstruktur unterhalb eines Polsterstruktur-Aufnahmeelementes.

Eine mögliche Ausführung der Erfindung wird nachfolgend in einem Ausführungsbeispiel erläutert. Für die Zwecke der Beschreibung soll die in Längsrichtung eines Fahrzeuges liegende Richtung mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem.

Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

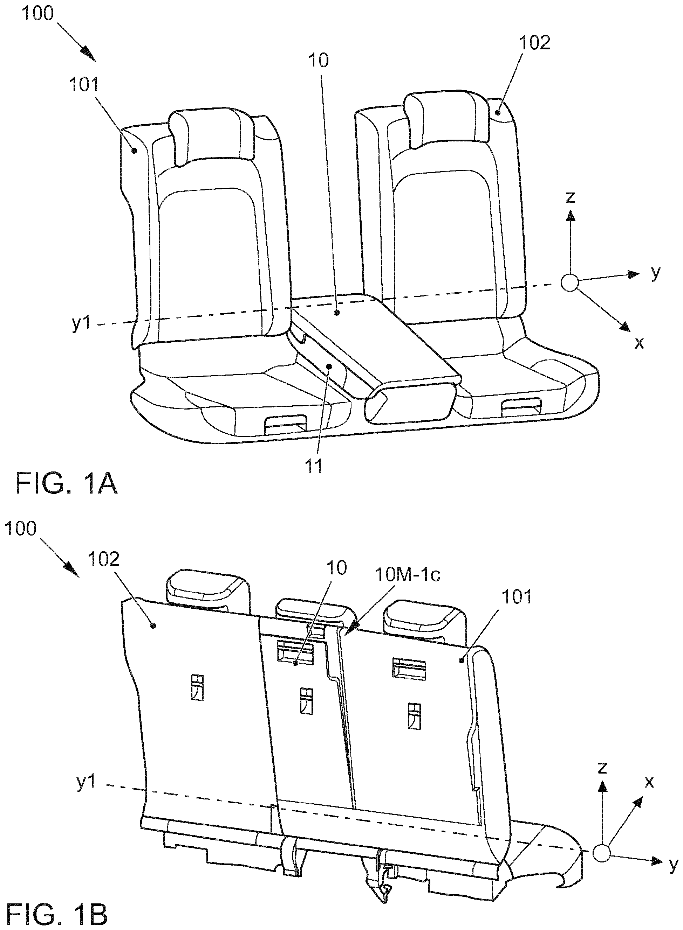

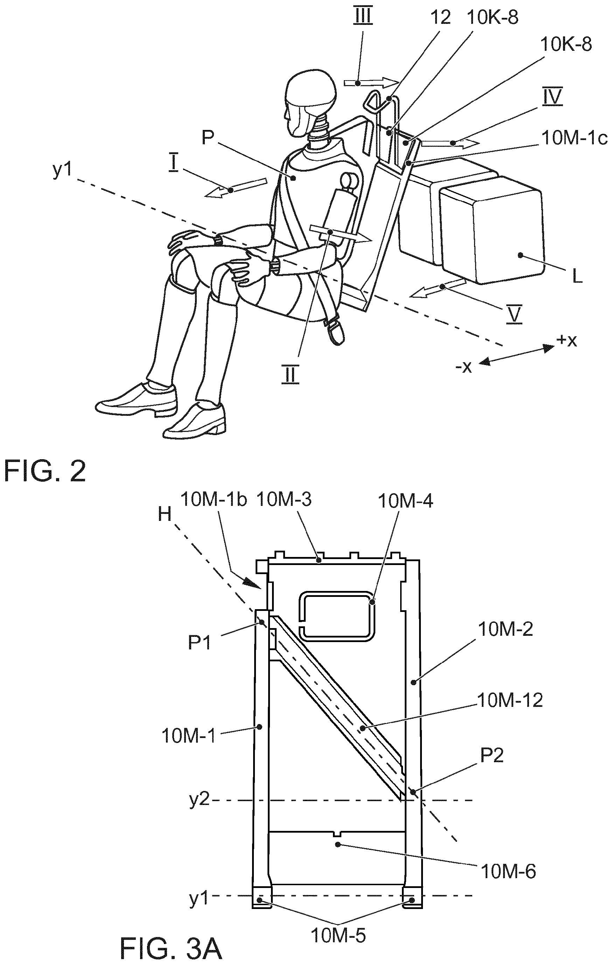

Die Figuren 1 und 2 zeigen in einer perspektivischen Vorder- und einer Rückansicht eine Rücksitzbank 100, die zwei Fahrzeugsitze 101, 102 mit jeweils einem Sitzteil und einer Rückenlehne aufweist, zwischen denen eine Durchladeeinrichtung 10 angeordnet ist, die in einer heruntergeklappten Position eine Ablagefläche in der Mitte der Sitzfläche der Rücksitzbank 100 (vergleiche Figur 1) und in der hochgeklappten Position (vergleiche Figur 2) einen Teil der Rückenlehnenfläche der Rücksitzbank 100 bildet.

Die Durchladeeinrichtung 10 stellt somit eine reversibel klappbare Rückenlehne dar, welche eine Tragstruktur aufweist, die beispielhaft Gegenstand der vorliegenden Erfindung ist. Die nachfolgenden Erläuterungen gelten somit für Tragstrukturen von Rückenlehnen von Fahrzeugsitzen allgemein.

Die Durchladeeinrichtung 10, die nachfolgend verallgemeinernd als Tragstruktur bezeichnet wird, ist in Figur 2 zur Verdeutlichung der zu berücksichtigenden Lastfälle ohne die angrenzenden Komponenten der Rücksitzbank 100 gemäß den Figuren 1A und 1B dargestellt.

Erfindungsgemäß wird zur idealen Lastverteilung in der Tragstruktur 10 wie folgt vorgegangen.

Zuerst werden mit/an der Tragstruktur 10 eine Reihe von numerischen Crashanalysen durchgeführt, von denen ergebnisabhängige Lastfälle abgeleitet werden, die in der Figur 2 anhand der Kraftpfeile I, II, III, IV, V beispielhaft symbolisiert sind.

Die Lastfälle I bis V bilden ein Lastkollektiv, welches bei der Auslegung der Hybrid-Tragstruktur 10 zugrunde gelegt wird. Es werden folgende Lastfälle definiert: Lasteintrag I bei einem Frontcrash, Lasteintrag II bei einem Heckcrash, Lasteintrag III bei einem Kopfaufschlag, Lasteintrag IV bei einem Einsitztest, Lasteintrag V eines Ladegutes L bei einem Frontcrash I.

Die Lastfälle I bis V beziehungsweise das Lastkollektiv werden anschließend in einem Optimierungsverfahren, einer sogenannten Topologie-Optimierung unter Vorgabe eines bestimmten für die Tragstruktur 10 insgesamt im Fahrzeug vorgesehenen Bauraumes und unter Vorgabe der vorgesehenen Materialien sowie unter Vorgabe der in den mehreren Bauteilen der Tragstruktur 10 maximal zulässigen Bauteilspannungen modellhaft berechnet.

Dabei findet ferner Berücksichtigung, dass die Tragstruktur 10 einen Festpunkt F an einer benachbarten ortsfesten Struktur, beispielsweise einer benachbarten Rückenlehne (vergleiche die Figuren 1 und 2) aufweist und zudem auf einer horizontalen Drehachse y1 mit entsprechenden Verbindungsmitteln mit einer weiteren benachbarten Struktur (vergleiche die Figuren 1 und 2) beweglich verbunden ist.

Mit anderen Worten die Tragstruktur 10 ist in der Einbausituation einerseits in ihrem oberen Bereich beziehungsweise an ihrem oberen Ende an der benachbarten Struktur (vergleiche Figuren 1 und 2) über den Festpunkt F nur einseitig an der benachbarten Struktur befestigt. In ihrem unteren Bereich beziehungsweise an ihrem unteren Ende ist die Tragstruktur 10 in der Einbausituation andererseits entlang der in y-Richtung verlaufenden horizontalen Drehachse y1 fest mit einer weiteren benachbarten Struktur beispielsweise einer Sitzteil-Struktur fest verbunden.

Unter Berücksichtigung dieser für dieses Ausführungsbeispiel spezifischen Parameter erfolgt iterativ die Topologie-Optimierung gemäß der gestellten Aufgabe, wobei eine Hybrid-Tragstruktur gesucht wird, die sich auf einfache Weise herstellen lässt, und die bei geringem Bauteilgewicht eine ausreichende und auf die in die Tragstruktur einwirkenden Kräfte abgestimmte Stabilität aufweist.

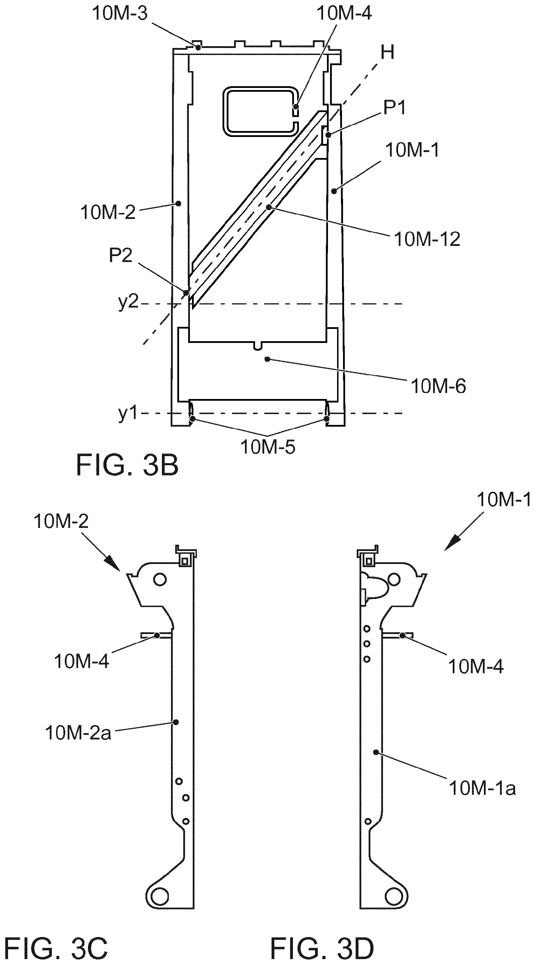

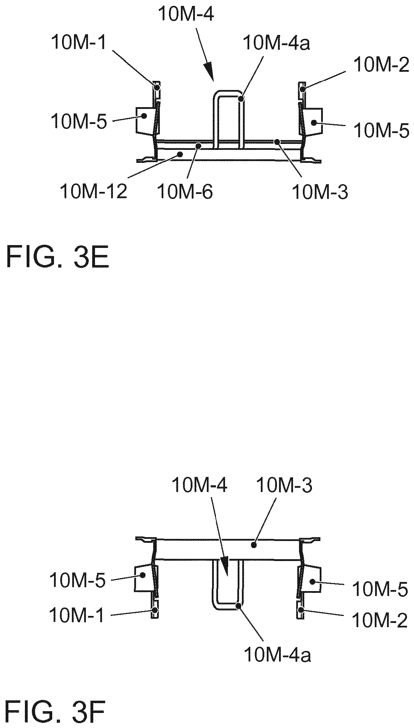

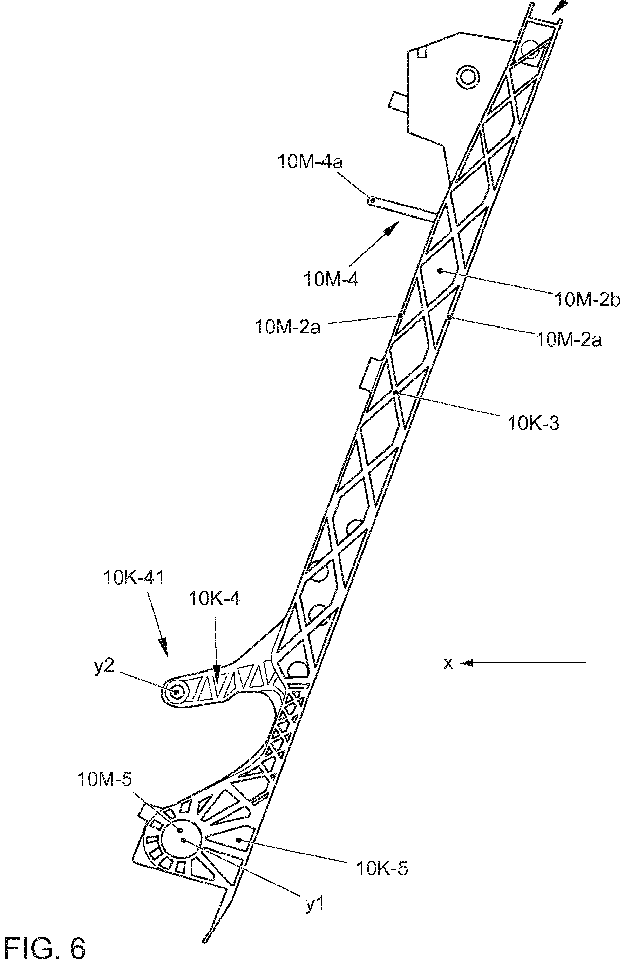

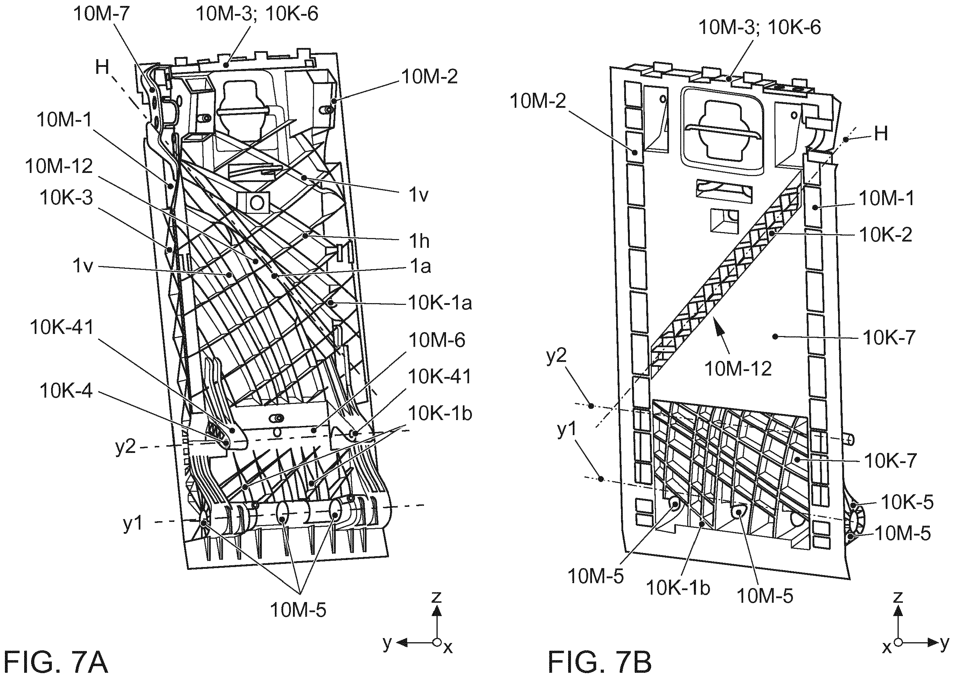

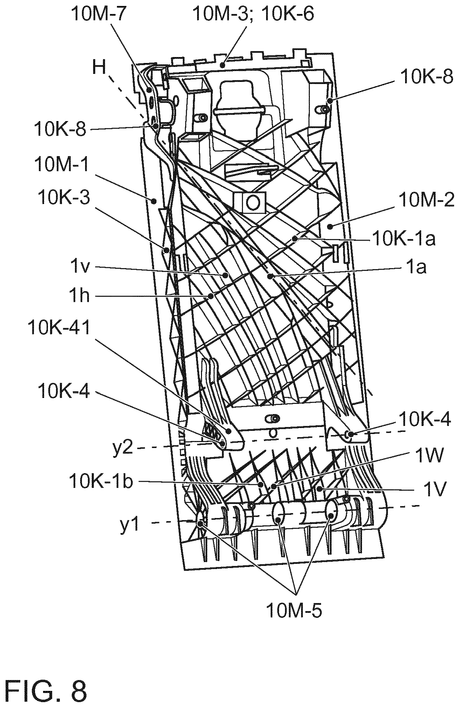

Das Ergebnis der vorbeschriebenen Topologie-Optimierung führt zu einer Tragstruktur 10, die in den nachfolgenden Figuren 3 bis 8 erläutert ist.

Die Tragstruktur 10 umfasst im Ergebnis der Topologie-Optimierung eine spezifische Metallstruktur 10M und eine spezifische Kunststoffstruktur 10K und bildet somit eine spezifische für den jeweiligen Anwendungsfall optimierte Hybrid-Tragstruktur 10.

Die Metallstruktur 10M ist mehrteilig ausgebildet und wird in eine Form eingelegt, wonach in die Form Kunststoff eingebracht wird, der die Bauteile der Metallstruktur 10M in einem einteiligen die Bauteil der Metallstruktur 10M umgebenden Kunststoffbauteil mit einer vorgebbaren Struktur zusammenfügt. Mit anderen Worten durch die eingebrachte Kunststoffstruktur, werden die mehreren Bauteile der Metallstruktur 10M mittels Kunststoff zu einem Zusammenbauteil verbunden, wobei gleichzeitig die Kunststoffstruktur ausgebildet wird. Grundsätzlich besteht in einer alternativen Ausgestaltung die Möglichkeit die Metallstruktur 10M einteilig auszubilden und in die Form einzulegen, wonach in die Form Kunststoff eingebracht wird, der die einteilige Metallstruktur 10M mit dem Kunststoffbauteil verbindet, wobei der Kunststoffstruktur die gewünschte Struktur vorgegeben werden kann.

### Die Metallstruktur 10M der Hybrid-Tragstruktur 10:

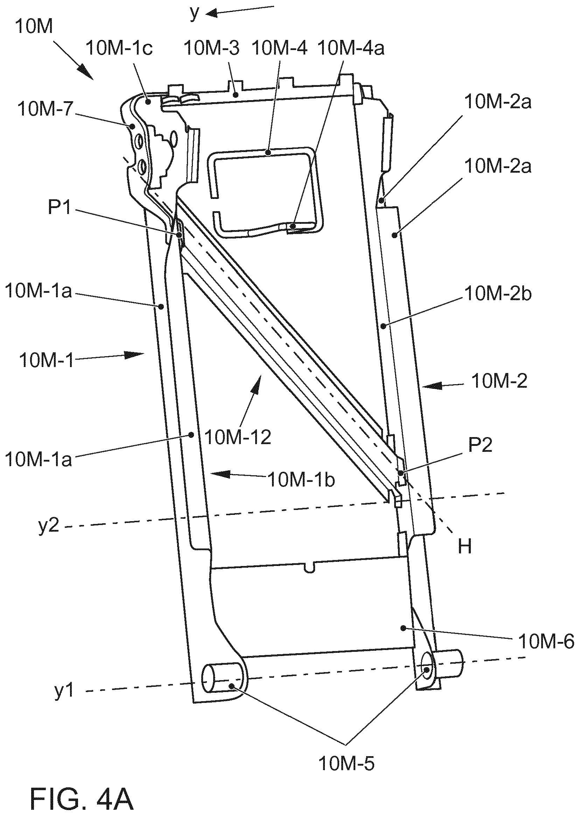

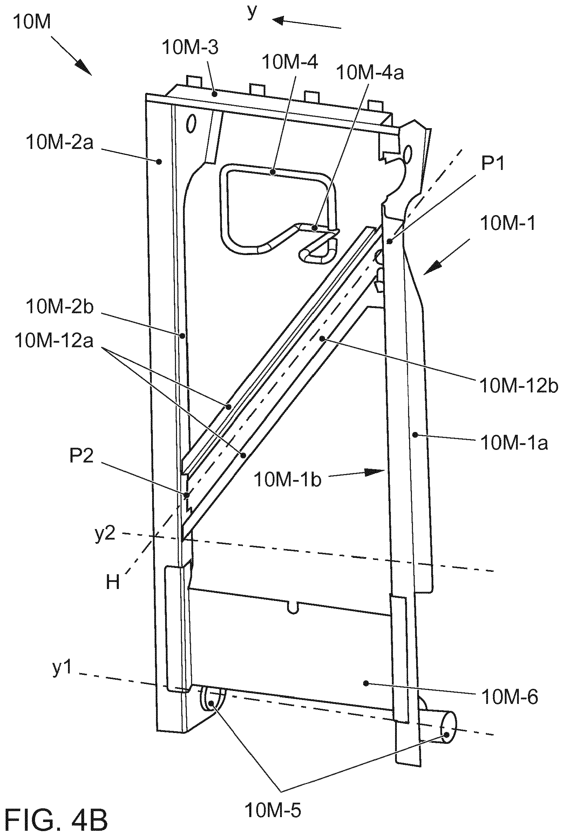

Es wird empfohlen zunächst die Figuren 3A bis 3E und die Figuren 4A und 4B in einer Zusammenschau zu betrachten, anhand dessen die Bauteile der Metallstruktur 10M erläutert werden.

Die Figur 3A zeigt eine Draufsicht auf die Metallstruktur 10M, der aus der Metallstruktur 10M und der Kunststoffstruktur 10K bestehenden erfindungsgemäßen Hybrid-Tragstruktur 10.

Die Metallstruktur 10M umfasst ein erstes Seitenholmprofil 10M-1 (links) und ein zweites Seitenholmprofil 10M-2 (rechts), deren Längsachsen in der Einbausituation in z-Richtung angeordnet sind. In dem ersten Seitenholmprofil 10M-1 ist ein Schlossaufnahmeelement 10M-1c ausgebildet, über das die Metallstruktur 10M mit dem benachbarten Strukturteil in der hochgeklappten Einbausituation (vergleiche Figur 1B) fest verbunden ist.

Die Metallstruktur 10M umfasst ferner ein Kopfprofil 10M-3, dessen Längsachse in der Einbausituation in y-Richtung quer zumindest zu den Seitenholmprofilen 10M-1, 10M-2 angeordnet ist, welches die Seitenholmprofile 10M-1, 10M-2 im Zusammenbauzustand miteinander verbindet.

Bei der Topologie-Optimierung wurde erfindungsgemäß herausgefunden, dass eine Hauptlastlinie H zwischen dem Schlossaufnahmeelement 10M-1c des ersten Seitenholmprofils 10M-1 und dem zweiten Seitenholmprofil 10M-2 kurz oberhalb einer durch die Topologie-Optimierung ermittelten horizontalen Achse y2 der Hybrid-Tragstruktur 10 verläuft, sodass ein Verbindungsprofil 10M-12 im Zusammenbauzustand der Hybrid-Tragstruktur 10 zwischen den Anbindungspunkten P1 und P2 an den Seitenholmprofilen 10M-1, 10M-2 angreift.

Der erste Anbindungspunkt P1 befindet sich kurz unterhalb des Schlossaufnahmeelementes 10M-1c des ersten Seitenholmprofils 10M-1, wobei sich der zweite Anbindungspunkt P2 im unteren Bereich bei etwa 2/3 der Gesamtlänge des zweiten Seitenholmprofils 10M-2 in vertikaler Längsrichtung (z-Richtung) von oben nach unten gesehen, insbesondere kurz oberhalb der durch die Topologie-Optimierung ermittelten horizontalen Achse y2 befindet.

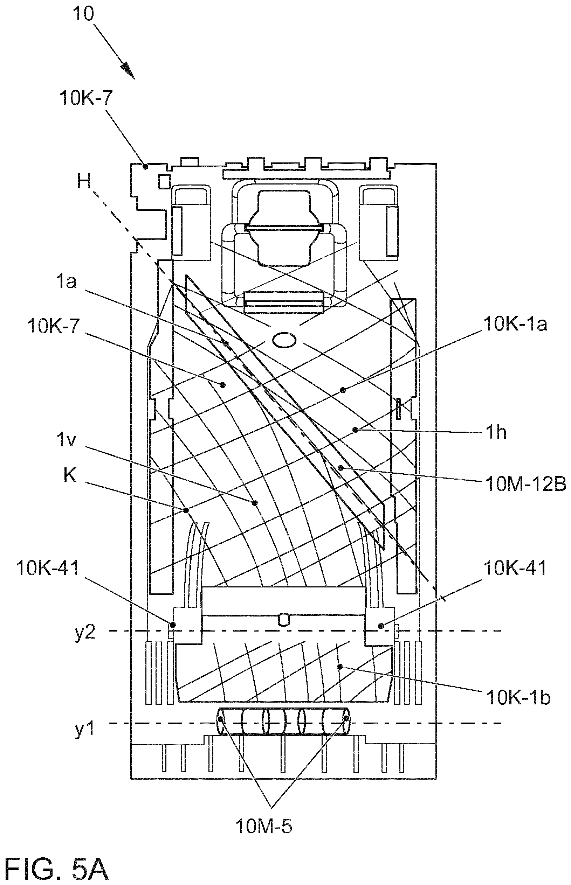

In den Bauraum zwischen den Seitenholmprofilen 10M-1, 10M-2 wird als Funktionselement ein metallischer Profildraht 10M-4 angeordnet, der nach Fertigstellung der Hybrid-Tragstruktur 10 in einer aus Kunststoff ausgebildeten Grundplatte 10K-7 (vergleiche vorab Figuren 5A bis 8) befestigt ist, worauf noch eingegangen wird.

In den metallischen Seitenholmprofilen 10M-1, 10M-2 werden zudem bereits metallische Aufnahmehülsen 10M-5 vorgesehen.

Zu der Metallstruktur 10M gehören zudem ein plattenartiger Einleger 10M-6, der jedoch nicht aus Gründen der Stabilität der metallischen Tragstruktur 10M angeordnet wird, sondern in Bezug auf einen Frontcrash-Lastfall V eine Sicherheitsfunktion hinsichtlich des auf die Metallstruktur 10M auftreffenden Ladegutes L (vergleiche Figur 2) erfüllt.

Die Figur 3B zeigt die Metallstruktur 10M in einer Rückansicht, wobei die Metallstruktur 10M gegenüber der Figur 3A um eine gedachte vertikale Drehachse um 180° gedreht ist.

Die Figur 3C zeigt die Metallstruktur 10M in einer Seitenansicht, wobei die Metallstruktur 10M gegenüber der Figur 3A um die gedachte vertikale Drehachse um 90° nach links gedreht ist.

Der zweite metallische Seitenholm 10M-2 ist als C-Profil ausgebildet und weist zwei gegenüberliegende Profilschenkel 10M-2a auf, die sich in der Einbausituation der Metallstruktur 10M im Fahrzeug in y-Richtung erstrecken, wobei in der Figur 3C nur einer der sich gegenüberliegenden Profilschenkel 10M-2a sichtbar ist. Die Profilschenkel 10M-2a erstrecken sich seitlich des zweiten metallischen Seitenholms 10M-2 in Verlängerung der zwischen den Seitenholmen 10M-1, 10M-2 aufgespannten y/z-Ebene.

Die Figur 3D zeigt die Metallstruktur 10M in einer Seitenansicht, wobei die Metallstruktur 10M gegenüber der Figur 3A um die gedachte vertikale Drehachse um 90° nach rechts gedreht ist.

Der erste Seitenholm 10M-1 ist ebenfalls als C-Profil ausgebildet und weist zwei gegenüberliegende Profilschenkel 10M-1a auf, die sich an der Metallstruktur 10 in der Einbausituation in y-Richtung erstrecken, wobei in der Figur 3D wiederum nur einer der sich gegenüberliegenden Profilschenkel 10M-1a sichtbar ist. Die Profilschenkel 10M-1a erstrecken sich seitlich des ersten metallischen Seitenholms 10M-1 in Verlängerung der zwischen den Seitenholmen 10M-1, 10M-2 aufgespannten y/z-Ebene.

Bei in +/-x-Richtung (vergleiche Figur 2) wirkenden Kräften, gemäß den Lastfällen I bis V weisen die Seitenholmprofile 10M-1, 10M-2 mit den sich in der Einbausituation in y-Richtung erstreckenden Profilschenkeln 10M-1a, 10M-2a in vorteilhafter Weise eine hohe Stabilität auf. Gegenüber sich in x-Richtung erstreckenden Profilschenkeln 10M-1a, 10M-2a wird durch die Anordnung der Profilschenkel 10M-1a, 10M-2a in y-Richtung (quer zur x-Richtung) das effektiv nutzbare Flächenträgheitsmoment bei in +/-x-Richtung (vergleiche Figur 2) wirkenden Kräften, deutlich erhöht.

Die Figur 3E zeigt die Metallstruktur 10M in einer Unteransicht, wobei das Kopfprofil 10M-3 der Metallstruktur 10M gegenüber der Figur 3A um eine gedachte horizontale Drehachse um 90° in die Blattebene hineingedreht ist, sodass der Betrachter von unten auf die Metallstruktur 10 blickt. In dieser Darstellung ist der Einleger 10M-6, das Verbindungsprofil 10M-12 sowie das Kopfprofil 10M-3 sichtbar.

Die Figur 3F zeigt die Metallstruktur 10M in einer Draufsicht, wobei das Kopfprofil 10M-3 der Metallstruktur 10M gegenüber der Figur 3A um eine gedachte horizontale Drehachse um 90° aus der Blattebene herausgedreht ist, sodass der Betrachter von oben auf die Metallstruktur 10 blickt.

In dieser Darstellung gemäß Figur 3F verdeckt das Kopfprofil 10M-3 sowohl das Verbindungsprofil 10M-12 als auch den plattenartigen Einleger 10M-6, sodass nur die auch in den Figuren 3C, 3D sichtbare Auskragung 10M-4a des Profildrahtes 10M-4 sichtbar ist.

Ferner sind die neben den Polsterstruktur-Aufnahmeelementen 10K-41 (vergleiche vorab Figuren 5A bis 8) dargestellt, die im Zusammenbauzustand der Hybrid-Tragstruktur 10 der Verrastung der auf der Hybrid-Tragstruktur 10 angeordneten ausschließlich in der Figur 1A dargestellten Polsterstruktur 11 dienen.

Die Figuren 4A und 4B zeigen die beschriebenen Bauteile mit gleichen Bezugszeichen in perspektivischen Darstellungen, wobei die Figur 4A eine Vorderansicht analog zu der Figur 3A und die Figur 4B eine Rückansicht analog zu der Figur 3B zeigen.

Hier wird insbesondere deutlich, dass die Seitenholme 10M-1, 10M-2 als C-Profile ausgebildet sind, deren gegenüberliegende Profilschenkel 10M-1a, 10M-2a der Metallstruktur 10M sich in der Einbausituation in y-Richtung erstrecken, wobei in der Figur 4A beide sich gegenüberliegende Profilschenkel 10M-2a sichtbar sind.

Ferner ist noch dargestellt, dass das Schlossaufnahmeelement 10M-1c des ersten Seitenholmprofils 10M-1 durch ein Halteelement 10M-7 komplettiert wird, wodurch sich zwischen dem Schlossaufnahmeelement 10M-1c und dem Halteelement 10M-7 ein Bauraum bildet, in dem nach einer entsprechenden Komplettierung der Rücksitzbank 100 ein Schloss (nicht dargestellt) aufgenommen ist.

Zudem ist in den Figuren 4A und 4B sichtbar gemacht, dass das zwischen den Seitenholmprofilen 10M-1, 10M-2 angeordnete Verbindungsprofil 10M-12 ebenfalls als ein C-Profil ausgebildet ist, welches ebenfalls zwei gegenüberliegende Profilschenkel 10M-12a aufweist, die sich in der Einbausituation der Metallstruktur 10M im Fahrzeug in x-Richtung erstrecken. Diese Ausgestaltung ist ebenfalls bei in +/-x-Richtung (vergleiche Figur 2) wirkenden Kräften, gemäß den Lastfällen I bis V bezüglich der Erhöhung der Stabilität der Tragstruktur 10 von Vorteil.

Die Figuren 4A und 4B zeigen ferner, dass sowohl in dem Einleger 10M-6 und in den zwischen den gegenüberliegenden Profilschenkeln 10M-1a, 10M-2a angeordneten Basisteilen 10M-1b, 10M-2b der Seitenholmprofile 10M-1, 10M-2 sowie in dem Basisteil 10M-12b des Verbindungsprofils 10M-12 zwischen den gegenüberliegenden Profilschenkeln 10M-12A Öffnungen ausgebildet sind, auf deren Bedeutung noch eingegangen wird.

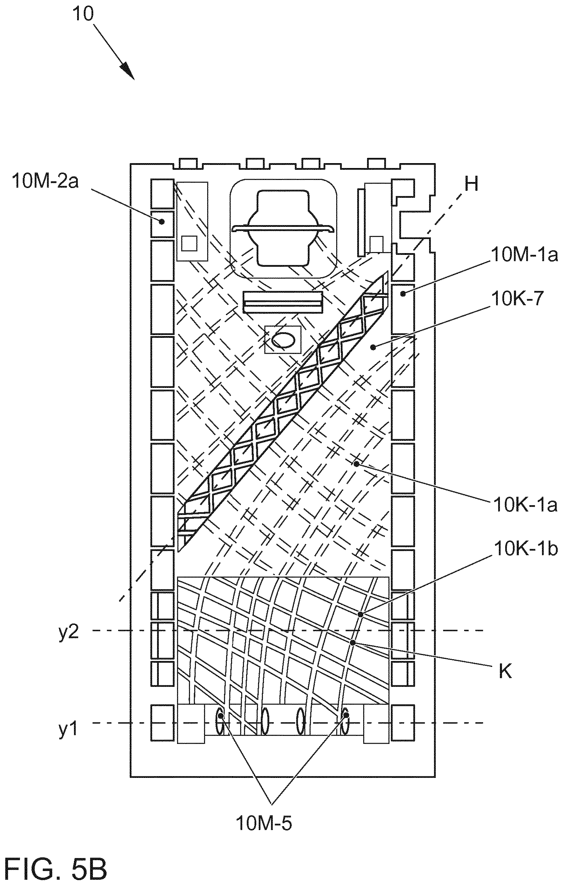

Außerdem ist zwischen den zwei gegenüberliegenden Profilschenkeln 10M-1a, 10M-2a der Seitenholmprofile 10M-1, 10M-2 und den zwei gegenüberliegenden Profilschenkeln 10M-12a des Verbindungsprofils 10M-12 jeweils ein Hohlraum ausgebildet, der mit einer Kunststoffstruktur 10K-2 (vergleiche vorab Figur 5B) versehen werden kann, wie nachfolgend noch detailliert erläutert wird.

Schließlich wird in den Figuren 4A und 4B noch deutlich, dass die Bauteile derart ausgebildet sind, dass die Fügestellen insoweit formschlüssig ausgebildet sind, dass die Bauteile in einer Kunststoffform positionsgetreu angeordnet werden können.

Die Kunststoffstruktur 10K der Hybrid-Tragstruktur 10:
Es wird empfohlen die Figuren 5A bis 5E und die Figuren 6, 7A, 7B und 8 in einer Zusammenschau zu betrachten, anhand derer die Kunststoffstruktur 10K und die Metallstruktur 10M und die Zusammenhänge zwischen den genannten Strukturen 10M, 10K erläutert werden.

Die Kunststoffstruktur 10K wird wie bereits erläutert, in einer Form einteilig durch Spritzgießen erzeugt. Als Kunststoff wird vorzugsweise ein Thermoplastwerkstoff, insbesondere ein faserverstärkter Thermoplastwerkstoff verwendet. In vorteilhafter Weise kann durch diesen Herstellungsprozess bei einer geometrischen Gestaltungsfreiheit eine hohe spezifische Steifigkeit der Kunststoffstruktur 10K erreicht werden.

Die sehr gute geometrische Gestaltungsfreiheit erlaubt es, erstens die für die Kraftübertragung maßgeblichen Fügezonen zwischen den Metall-Bauteilen 10M-1, 10M-2, 10M-3, 10M-4, 10M-5, 10M-6, 10M-7 der Metallstruktur 10M und der Kunststoffstruktur 10K auszubilden, wobei zweitens durch die sehr gute geometrische Gestaltungsfreiheit eine spezifische punktuelle oder bereichsweise Anpassung der Kunststoffstruktur 10F an sich hinsichtlich der Festigkeit in Abhängigkeit der über die Kunststoffstruktur 10K gewünschten Kraftübertragung gewährleistet werden kann.

Die Metallstruktur 10M für sich zeichnet sich bereits durch ein hohes Energieaufnahmevermögen aus, das heißt sie zeichnet sich bei einer hohen Festigkeit bei guten Energiedissipationseigenschaften aus.

Die Kunststoffstruktur 10K ergänzt die sehr guten Festigkeitseigenschaften der Metallstruktur 10M bei einem geringem Gewicht der Kunststoffstruktur 10K in gezielter Weise, wobei die Kunststoffstruktur 10K und die Metallstruktur 10M jede für sich lastpfadoptimiert ausgebildet und außerdem aufeinander abgestimmt und in vorteilhafter Weise lastpfadoptimiert miteinander kombiniert sind, worauf nachfolgend noch eingegangen wird.

Die Figuren 5A, 7A und Figur 8 (vergrößerte Darstellung) zeigen die Hybrid-Tragstruktur 10 als Kunststoffstruktur 10K mit der integrierten Metallstruktur 10M (analog Figur 3A) in einer perspektivischen Vorderansicht mit einem Blick schräg von oben auf die Vorderseite der Hybrid-Tragstruktur 10.

Die Figur 5B zeigt die Kunststoffstruktur 10K mit der integrierten Metallstruktur 10M (analog Figur 3B) in einer Rückansicht, wobei die Hybrid-Tragstruktur 10 um eine gedachte vertikale Drehachse um 180° gedreht ist.

Die einteilige Kunststoffstruktur 10K umfasst erfindungsgemäß mehrere Bereiche.

### Erster Bereich:

Ein erster Bereich der Kunststoffstruktur 10K ist als Netzstruktur, insbesondere als Spinnennetz-Struktur 10K-1 zwischen den Seitenholmprofilen 10M-1, 10M-2 ausgebildet, wobei sich die aufgespannte Ebene der Spinnennetz-Struktur 10K-1 in der Einbausituation der Hybrid-Tragstruktur 10 im Fahrzeug in y-Richtung erstreckt. Die Spinnennetz-Struktur 10K-1 erstreckt sich in z-Richtung gesehen zwischen den zu der Kunststoffstruktur 10K gehörenden Kopfstützen-Aufnahmen 10K-8 (vergleiche Figur 2) bis zu der horizontalen Drehachse y1 der Tragstruktur 10.

Dabei ist die Spinnennetz-Struktur 10K-1 auf der Vorderseite gemäß Figur 5A unterbrochen ausgebildet, während sie auf der Rückseite gemäß der Rückansicht der Figur 5B durchgehend ausgebildet ist.

Auf der Vorderseite und auf der Rückseite bildet die Spinnennetz-Struktur 10K-1 eine erste Spinnennetz-Teilstruktur 10K-1a und eine zweite Spinnennetz-Teilstruktur 10K-1b aus.

Innerhalb der durch die zweite Spinnennetz-Teilstruktur 10K-1b aufgespannten Ebene ist der metallische Einleger 10M-6 zwischen den seitlichen Seitenholmprofilen 10M-1, 10M-2 angeordnet, der die zweite Spinnennetz-Teilstruktur 10K-1b in eine vorderseitige und eine rückseitige Spinnennetz-Teilstruktur 10K-1b in der Einbausituation gesehen in x-Richtung trennt.

Die zweite Spinnennetz-Teilstruktur 10K-1 liegt somit sowohl auf der in der Einbausituation dem Insassen zugewandten Seite (Vorderseite) des metallischen Einlegers 10M-6 der Hybrid-Tragstruktur 10 als auch auf der dem Insassen abgewandten Seite (Rückseite) des metallischen Einlegers 10M-6 der Hybrid-Tragstruktur 10.

Eine Unterbrechung ist zwischen den Spinnennetz-Teilstrukturen 10K-1a, 10K-1b in der Einbausituation gesehen in z-Richtung ausgebildet, da der zwischen den Teilstrukturen 10K-1a, 10K-1b liegende Bauraum zur Befestigung der auf Hybrid-Tragstruktur 10 angeordneten Polsterstruktur 11 (vergleiche Figur 11) benötigt wird, deren Struktur im Zusammenbauzustand in dem Bauraum der Hybrid-Tragstruktur 10 einliegt.

Mit anderen Worten die Spinnennetz-Struktur 10K-1 der Kunststoffstruktur 10K weist die erste und zweite Spinnennetz-Teilstruktur 10K-1a, 10K-1b auf, die auf der Rückseite der Hybrid-Tragstruktur 10 durchgehend und auf einer Vorderseite der Hybrid-Tragstruktur 10 unterbrochen ausgebildet ist.

Dabei erstreckt sich eine aufgespannte Ebene der ersten Spinnennetz-Teilstruktur 10K-1a zwischen den seitlichen Seitenholmprofilen 10M-1, 10M-2 der Hybrid-Tragstruktur und zwischen zu der Kunststoffstruktur 10K gehörenden Kopfstützen-Aufnahmen 10K-8 an einem oberen Ende der Hybrid-Tragstruktur 10 bis zu einer horizontalen Achse y2 zwischen dem oberen und unteren Ende der Hybrid-Tragstruktur 10, während innerhalb der durch die zweite Spinnennetz-Teilstruktur 10K-1b aufgespannten Ebene der metallische Einleger 10M-6 zwischen den seitlichen Seitenholmprofilen 10M-1, 10M-2 angeordnet ist, der die zweite Spinnennetz-Teilstruktur 10K-1b in eine vorderseitige und eine rückseitige zweite Spinnennetz-Teilstruktur 10K-1b trennt.

Die erste Spinnennetz-Teilstruktur 10K-1a umfasst eine Zentralrippe 1a, die der Hauptlastlinie H folgt.

Bei der Topologie-Optimierung wurde erfindungsgemäß herausgefunden, dass die Hauptlastlinie H zwischen dem Schlossaufnahmeelement 10M-1c des ersten Seitenholmprofils 10M-1 und dem zweiten Seitenholmprofil 10M-2 kurz oberhalb der durch die Topologie-Optimierung ermittelten horizontalen Achse y2, die oberhalb der horizontalen Drehachse y1 parallel verläuft, sodass das Verbindungsprofil 10M-12 im Zusammenbauzustand zwischen den bereits definierten Anbindungspunkten P1 und P2 an den Seitenholmprofilen 10M-1, 10M-2 angreift.

Die Zentralrippe 1a beginnt somit ebenfalls kurz unterhalb des Schlossaufnahmeelementes 10M-1c des ersten Seitenholmprofils 10M-1 (analog erster Anbindungspunkt P1) und endet an dem zweiten Seitenholmprofil 10M-2 kurz oberhalb der durch die Topologie-Optimierung ermittelten horizontalen Achse y2 (analog zweiter Anbindungspunkt P2), wodurch die gewünschte hohe Stabilität der Hybrid-Tragstruktur 10 bei geringem Gewicht durch eine kombinierte Anordnung der aus Kunststoff bestehenden Zentralrippe 1a und des aus Metall bestehenden Verbindungsprofils 10M-12 möglich ist.

Die Materialstärken der metallischen Seitenholmprofile 10M-1, 10M-2 und des metallischen Verbindungsprofils 10M-12 können in vorteilhafter Weise entsprechend reduziert werden, wodurch das Gesamtgewicht der Hybrid-Tragstruktur 10 sinkt.

Die Zentralrippe 1a ist jedoch um eine auch im Crashfall ausreichende Stabilität zu erreichen Bestandteil der dargestellten Spinnennetz-Struktur 10K-1, die auf der Vorderseite des Einlegers 10M-6 als erste Spinnennetz-Teilstruktur 10K-1a und zweite Spinnennetz-Teilstruktur 10K-1b und auf der Rückseite des Einlegers 10M-6 als durchgehende Spinnennetz-Struktur 10K-1 aus den beiden Spinnennetz-Teilstrukturen 10K-1a und 10K-1b ohne Unterbrechung ausgebildet ist, wie in Figur 5B deutlich wird. In der Rückansicht gemäß Figur 5B ist die erste Spinnennetz-Teilstruktur 10K-1a von der aus Kunststoff ausgebildeten Grundplatte 10K-7 verdeckt.

Sowohl in der Vorderansicht gemäß der Figur 5A als auch in der Rückansicht gemäß der Figur 5B wird deutlich, dass von der Zentralrippe 1a ausgehend halbkreisförmig abgehende im Wesentlichen vertikal ausgerichtete Rippen 1v und im Wesentlichen horizontal ausgerichtete Rippen 1h angeordnet sind, die sich im Verlauf untereinander kreuzen und die dargestellte unregelmäßige spinnennetztypische Struktur 10K-1 bilden. Dabei folgen vor allem, die im Wesentlichen vertikal ausgerichteten Rippen 1v halbkreisförmig der Zentralrippe 1a, da der Hauptlastpfad durch die Topologie-Optimierung entlang der Hauptlastlinie H festgestellt wurde.

Eine weitere Besonderheit besteht darin, dass die Zentralrippe 1a auf dem Basisteil 10M-12b des Verbindungsprofils 10M-12 entlang läuft, wodurch der Zentralrippe 1a zwischen den Seitenholmprofilen 10M-1, 10M-2 weniger Bauraum zur Verfügung steht. Dadurch weisen die Zentralrippe 1a und alle auf dem Basisteil 10M-12b entlang laufenden im Wesentlichen vertikal ausgerichteten Rippen 1v und im Wesentlichen horizontal ausgerichteten Rippen 1h in x-Richtung gesehen geringere Tiefen auf.

Die außerhalb des Verbindungsprofils 10M-12 angeordneten im Wesentlichen vertikal ausgerichteten Rippen 1v und im Wesentlichen horizontal ausgerichteten Rippen 1h weisen in x-Richtung gesehen eine Tiefe auf, die im Wesentlichen der Tiefe der Basisteile 10M-1b, 10M-2b der Seitenholmprofile 10M-1, 10M-2 entspricht.

Im Bereich des Einlegers 10M-6 ist ein Teil der zweiten Spinnennetz-Teilstruktur 10K-1b insassenzugewandt vor dem metallischen Einleger 10M-6 und ein anderer Teil der zweiten Spinnennetz-Teilstruktur 10K-1b insassenabgewandt beziehungsweise dem Ladegut L zugewandt hinter dem metallischen Einleger 10M-6 angeordnet, sodass die im Wesentlichen vertikal ausgerichteten Rippen 1v und die im Wesentlichen horizontal ausgerichteten Rippen 1h eine Tiefe aufweisen, die jeweils abzüglich der halben Bauteiltiefe des metallischen Einlegers 10M-6 der Hälfte der Tiefe der Basisteile 10M-1b, 10M-2B der Seitenholmprofile 10M-1, 10M-2 entspricht.

### Zweiter Bereich:

Ein zweiter Bereich (vergleiche Figur 5B) der Kunststoffstruktur 10K ist ebenfalls als Netzstruktur, insbesondere als Kreuz-Netzstruktur 10K-2 ausgebildet. Die Kreuz-Netzstruktur 10K-2 ist zwischen den Profilschenkeln 10M-12a des Verbindungsprofils 10M-12 ausgebildet, wobei sich die aufgespannte Ebene der Kreuz-Netzstruktur 10K-2 in der Einbausituation der Hybrid-Tragstruktur 10 im Fahrzeug in y-Richtung erstreckt. Die Kreuz-Netzstruktur 10K-2 ist aus sich regelmäßig kreuzenden Rippen ausgebildet, die im dargestellten Ausführungsbeispiel im Wesentlichen quadratische Waben bilden.

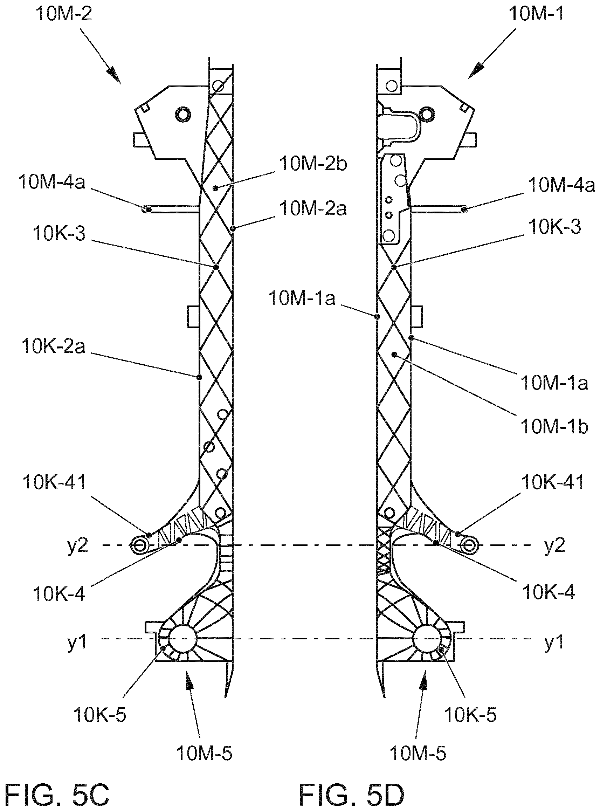

Die Figur 5C zeigt die Kunststoffstruktur 10K mit der integrierten Metallstruktur 10M (analog Figur 3C) in einer Seitenansicht, wobei die Hybrid-Tragstruktur 10 um die gedachte vertikale Drehachse um 90° nach links gedreht ist.

Die Figur 5D zeigt die Kunststoffstruktur 10K mit der integrierten Metallstruktur 10M (analog Figur 3D) in einer Seitenansicht, wobei die Hybrid-Tragstruktur 10M um die gedachte vertikale Drehachse um 90° nach rechts gedreht ist.

### Dritter Bereich:

Ein dritter Bereich (vergleiche Figur 5C) der Kunststoffstruktur 10K ist ebenfalls als Netzstruktur, insbesondere als weitere Kreuz-Netzstruktur 10K-3 zwischen den Profilschenkeln 10M-1a, 10M-2a der Seitenholmprofile 10M-1, 10M-2 ausgebildet, wobei sich die aufgespannten Ebenen der weiteren Kreuznetz-Strukturen 10K-3 in der Einbausituation der Hybrid-Tragstruktur 10 im Fahrzeug in x-Richtung erstrecken. Die weiteren Kreuznetz-Strukturen 10K-3 sind aus sich regelmäßig kreuzenden Rippen ausgebildet, die im Wesentlichen rhombische Waben bilden. Damit sich die Spinnennetz-Struktur 10K-1 mit den beschriebenen Kreuznetz-Strukturen 10K-2, 10K-3 kunststoffseitig verbindet, sind in dem Einleger 10M-6 und in den zwischen den gegenüberliegenden Profilschenkeln 10M-1a, 10M-2a angeordneten Basisteilen 10M-1b, 10M-2b der Seitenholmprofile 10M-1, 10M-2 sowie in dem zwischen den gegenüberliegenden Profilschenkeln 10M-12A des Verbindungsprofils 10M-12 ausgebildeten Basisteil 10M-12b des Verbindungsprofils 10M-12 Öffnungen ausgebildet.

In bevorzugter Ausgestaltung der Erfindung ist vorgesehen, dass bei der Herstellung der Hybrid-Tragstruktur 10 Kunststoff durch die vorhandenen Öffnungen fließt, wodurch sich in vorteilhafter Weise die genannten metallischen Bauteile 10M-6, 10M-1, 10M-2 und 10M-12 zusätzlich zu den mittels Kunststoff verbundenen Fügeverbindungen über die Netzstrukturen 10K-1, 10K-2, 10K-3 miteinander verbinden.

Es werden weitere Kunststoff-Strukturbereiche ausgebildet.

### Vierter Bereich:

Ein vierter Bereich der Kunststoffstruktur 10K betrifft die Ausbildung des Polsterstruktur-Aufnahmeelementes 10K-41 mit einer beispielhaft dargestellten Dreiecks-Netzstruktur 10K-4, welche sich in der Einbausituation der Hybrid-Tragstruktur 10 im Fahrzeug in x-Richtung erstreckt, sodass sich die seitlich angeordnete Dreiecks-Netzstruktur 10K-4 ebenfalls in x-Richtung erstreckt. Die Dreiecks-Netzstruktur 10K-4 ist aus regelmäßig abgewinkelten Rippen ausgebildet, die im Wesentlichen dreieckige Waben bilden. Die Hybrid-Tragstruktur 10 umfasst somit die aus Kunststoff bestehenden mit der stabilisierenden Dreiecks-Netzstruktur 10K-4 versehenen Polsterstruktur-Aufnahmeelemente 10K-41, in denen die Polsterstruktur 11 einends aufgenommen und anderenends über die Auskragung 10M-4a des metallischen Profildrahtes 10M-4 an der Hybrid-Tragstruktur 10 verrastet wird.

### Fünfter Bereich:

Ein fünfter Bereich betrifft die Ausbildung der Umspritzung der Aufnahmehülse 10M-5 mit einer beispielhaft dargestellten Kreissegment-Netzstruktur 10K-5, welche sich in der Einbausituation der Hybrid-Tragstruktur 10 im Fahrzeug in x-Richtung erstreckt, sodass sich die seitlich angeordnete Netzstruktur 10K-5 ebenfalls in x-Richtung erstreckt. Die Kreissegment-Netzstruktur 10K-5 ist aus regelmäßig strahlenförmig von den Aufnahmehülsen 10M-5 abgehenden Rippen ausgebildet, die im Wesentlichen kreissegmentförmige Waben bilden. In Figur 5B wird noch deutlich, dass die innerhalb der zweiten Spinnennetz-Teilstruktur 10K-1b der Spinnennetz-Struktur 10K-1 liegende Umspritzung auf der insassenabgewandten Seite bis zu den mit Kunststoff umspritzten Aufnahmehülsen 10M-5 geführt ist.

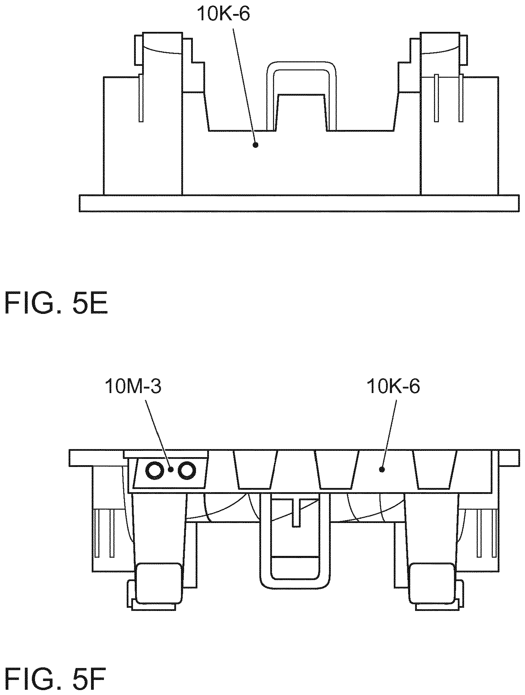

Die Figur 5E zeigt die Kunststoffstruktur 10K mit der integrierten Metallstruktur 10M (analog Figur 3E) in einer Unteransicht, wobei das Kopfprofil 10M-3 der Metallstruktur 10M um eine gedachte horizontale Drehachse um 90° in die Blattebene hineingedreht ist, sodass der Betrachter von unten auf die Hybrid-Tragstruktur 10 blickt.

Die Figur 5F zeigt die Kunststoffstruktur 10K mit der integrierten Metallstruktur 10M (analog Figur 3F) in einer Draufsicht, wobei das Kopfprofil 10M-3 der Hybrid-Tragstruktur 10M um eine gedachte horizontale Drehachse um 90° aus der Blattebene herausgedreht ist, sodass der Betrachter von oben auf die Metallstruktur 10 blickt.

### Sechster Bereich:

Ein sechster Bereich betrifft die Umspritzung 10K-6 des Kopfprofils 10M-3, wie durch die Figuren 5E und 5F verdeutlicht wird.

### Siebenter Bereich:

Schließlich wird bei der Herstellung der Hybrid-Tragstruktur 10 als siebenter Bereich eine Grundplatte 10K-7 hergestellt, die der Hybrid-Tragstruktur 10 insgesamt eine plattenartige Gestalt gibt.

Dabei bildet die Grundplatte 10K-7 in der Einbausituation der Hybrid-Tragstruktur 10 auf der dem insassenabgewandten Seite im Bereich der ersten Spinnennetz-Teilstruktur 10K-1a direkt den rückseitigen Abschluss der Hybrid-Tragstruktur 10 (vergleiche Figur 5B).

Die Grundplatte 10K-7 ist im Bereich der zweiten Spinnennetz-Teilstruktur 10K-1b parallel an dem in x-Richtung gesehen zwischen den Seitenholmprofilen 10M-1, 10M-2 außermittig angeordneten Einleger 10M-6 ausgebildet und bildet somit indirekt den rückseitigen Abschluss der Hybrid-Tragstruktur 10. Den direkten rückseitigen insassenabgewandten Abschluss der Hybrid-Tragstruktur 10 bildet die zweite Spinnennetz-Teilstruktur 10K-1b der Spinnennetz-Struktur 10K (vergleiche Figur 5B).

Dabei ist der Einleger 10M-6 in der hochgeklappten Einbausituation der Hybrid-Tragstruktur 10 im Ausführungsbeispiel außermittig in Richtung des Insassen angeordnet. Diese mehr dem Insassen zugewandte Anordnung des Einlegers 10M-6 ergibt sich insbesondere durch die Auswahl der in x-Richtung liegenden Tiefe der Rippen 1v, 1h der zweiten Spinnennetz-Teilstruktur 10K-1b der Spinnennetz-Struktur 10K-1. Die Rippen 1v, 1h der zweiten Spinnennetz-Teilstruktur 10K-1b der Spinnennetz-Struktur 10K-1und die Grundplatte 10K-7 sind nach der Fertigstellung der Hybrid-Tragstruktur 10 miteinander verbunden und erzeugen eine Schutzfunktion für im Crashfall auf die Rückseite der Hybrid-Tragstruktur 10 auftreffendes Ladegut L gemäß dem Frontcrash-Lastfall V (vergleiche Figur 2), wie noch näher erläutert wird.

Je nachdem, welche maximal zulässigen Bauteilspannungen bei der modellhaften Berechnung der Rippen 1v, 1h der zweiten Spinnennetz-Teilstruktur 10K-1b zugelassen werden, ergeben sich für die Rippen 1v, 1h die entsprechenden Bauteilmaße (Höhe x Länge x Tiefe), wobei unter anderem je nach der vorgesehenen zulässigen Bauteilspannung die Tiefe T in x-Richtung gesehen, variieren kann. Entsprechend dieser Variation liegt der Einleger 10M-6 entweder mehr insassenabgewandt, mittig oder mehr insassenzugewandt zwischen den Seitenholmprofilen 10M-1, 10M-2 der Hybrid-Tragstruktur 10.

Je nachdem, welche maximal zulässigen Bauteilspannungen bei der modellhaften Berechnung der Rippen 1v, 1h der zweiten Spinnennetz-Teilstruktur 10K-1b zugelassen werden, ergeben sich die Höhen der Rippen 1v, 1h in z-Richtung (im Wesentlichen vertikal) gesehen und die Längen der Rippen 1v, 1h in y-Richtung (im Wesentlichen horizontal) gesehen, wobei zudem die Kreuzungspunkte K festgelegt werden, die wie in den Figuren sichtbar wird, gemäß der Topologie-Optimierung unregelmäßig angeordnet sind.

Die Kreuzungspunkte K sowie die Höhen und Längen der Rippen 1v, 1h der zweiten Spinnennetz-Teilstruktur 10K-1b variieren ebenfalls entsprechend der für die zweite Spinnennetz-Teilstruktur 10K-1b vorgesehenen maximal zulässigen Bauteilspannung.

Es versteht sich, dass in Abhängigkeit der vorgesehenen maximal zulässigen Bauteilspannung sowohl die Tiefen, als auch die Höhen und Längen der Rippen 1v, 1h der zweiten Spinnennetz-Teilstruktur 10K-1b auf der Vorderseite (vergleiche Figur 5A) und der Rückseite (vergleiche Figur 5B) entsprechend variieren.

Diese Überlegungen treffen erfindungsgemäß für alle anderen Netzstrukturen gleichermaßen zu.

Nachfolgend wird auf die insassenabgewandte Seite der zweiten Spinnennetz-Teilstruktur 10K-1b detaillierter eingegangen, da diese zweite Spinnennetz-Teilstruktur 10K-1b wie erwähnt erfindungsgemäß gegenüber auftreffendem Ladegut L gemäß dem Frontcrash-Lastfall V eine Schutzfunktion übernimmt.

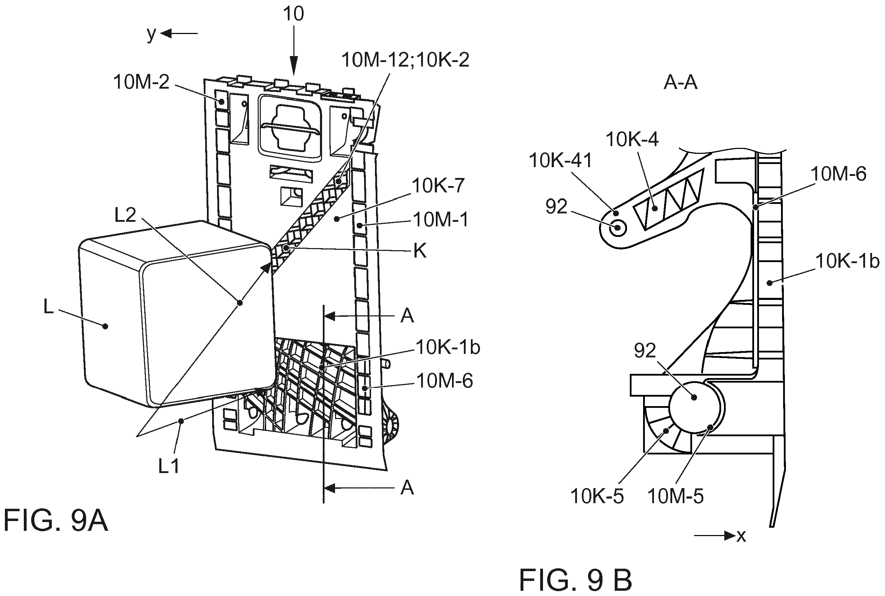

Die Figur 9A zeigt perspektivisch die Rückseite der Hybrid-Tragstruktur 10 mit dem gemäß dem Frontcrash-Lastfall V auf die insassenabgewandte Seite auftreffenden Ladegut L, symbolisiert durch die Ladegutwürfel. Gemäß den Pfeilspitzen der Pfeile L1 und L2 werden stellvertretend für den im Ergebnis gegebenenfalls flächig auftretenden Ladgutwürfel auslegungsseitig zwei punktuelle Aufschlagpunkte definiert.

Die Figur 9B zeigt einen Schnitt A-A durch die Hybrid-Tragstruktur 10 unterhalb des Polsterstruktur-Aufnahmeelementes 10K-41 gemäß Figur 9A mit der insassenzugewandten Seite links des metallischen Einlegers 10M-6 und der insassenabgewandten Seite rechts des metallischen Einlegers 10M-6.

Die Rippen 1v, 1h der zweiten Spinnennetz-Teilstruktur 10K-1b und die Rippen in der Kreuz-Netzstruktur 10K-2 im Verbindungsprofil 10M-12 werden erfindungsgemäß auf der insassenabgewandten Seite der Hybrid-Struktur 10 als Opferrippen ausgebildet, die bei der angenommenen punktuellen Belastung L1, L2 durch das Ladegut L definiert versagen und dabei so viel Energie aufnehmen, dass die restliche Hybrid-Struktur 10 intakt bleibt.

Es kommt in vorteilhafter Weise somit zu einer definierten Energieabsorption innerhalb der Opferrippen, sodass ein Brechen der Kunststoffstruktur 10K außerhalb der mit Opferrippen ausgeführten Bereiche vermieden wird. Um die entsprechende Funktion zu gewährleisten, ist es wie oben bereits erläutert, von besonderer Bedeutung, dass in Abhängigkeit der vorgesehen maximalen zulässigen Bauteilspannung sowohl die Tiefen, als auch die Höhen und Längen der Opferrippen 1v, 1h der zweiten Spinnennetz-Teilstruktur 10K-1b auf der Rückseite und entsprechend auf der Vorderseite (vergleiche Figur 5A und vergleiche Figur 5B) entsprechend variieren.

Analog dazu können die Rippen innerhalb der Kreuz-Netzstruktur 10K-2 im Verbindungsprofil 10M-12 entsprechend der vorgesehenen maximal zulässigen Bauteilspannung innerhalb des Verbindungsprofils 10M-12 ebenfalls in der Tiefe, als auch in der Höhe und in der Länge gegebenenfalls unter Veränderung der Kreuzungspunkte K entsprechend verändert werden.

Der zusätzlich angeordnete metallische Einleger 10M-1 dient erfindungsgemäß dazu, im Crashfall definiert gebrochene Kunststoffteile von dem insassenzugewandten Bereich der Hybrid-Tragstruktur 10 des Fahrzeugsitzes fernzuhalten. Außerdem stellt der metallische Einleger 10M-6 sicher, dass die in dem insassenzugewandten Bereich angeordneten Rippen 1v, 1h der zweiten Spinnennetz-Teilstruktur 10K-1b (vergleiche Figur 5A) nicht brechen.

Auch die der Kreuz-Netzstruktur 10K-2 innerhalb des metallischen Verbindungsprofils 10M-12 und das metallische Verbindungsprofil 10M-12 selbst, sorgen dafür, dass die Rippen 1v, 1h der ersten Spinnennetz-Teilstruktur 10K-1a insassenseitig in dem definierten Frontcrash-Lastfall V nicht brechen können.

Somit ist insgesamt sichergestellt, dass die Bauteilintegrität auch im definierten Frontcrash-Lastfall V erhalten bleibt, wobei sichergestellt ist, dass ein lokales Versagen von einzelnen Rippen innerhalb der ersten und zweiten Spinnennetz-Teilstruktur 10K-1a, 10K-1b nicht stattfindet.

Zudem ist vorgesehen, dass eine stattfindende Deformation der Opferrippen der Kreuz-Netzstruktur 10K-2 innerhalb des Verbindungsprofils 10M-12 und/oder der ersten Spinnennetz-Teilstruktur 10K-1a gezielt als Indikator verwendet wird. Liegt nach einem Crashfall gemäß dem Frontcrash-Lastfall V auf der insassenabgewandten Seite eine Deformation mindestens einer der Opferrippen vor, so kann ein Austausch der Hybrid-Tragstruktur 10 vorgenommen werden.

### Achter Bereich:

Ein achter Bereich betrifft die Kopfstützen-Aufnahmen 10K-8 (vergleiche Figuren 5A, 7A und 8), die bei der Herstellung der Hybrid-Tragstruktur 10 ebenfalls aus Kunststoff gefertigt werden. Einige der im Wesentlichen vertikal ausgerichteten Rippen 1v und der im Wesentlichen horizontal ausgerichteten Rippen 1h der ersten Spinnennetz-Teilstruktur 10K-1a sind bis zu den Kopfstützen-Aufnahmen 10K-81 geführt und stützen diese stabil innerhalb der Hybrid-Tragstruktur 10 ab.

### Bezugszeichenliste

- 100: Rücksitzbank
- 101: Fahrzeugsitz
- 102: Fahrzeugsitz
- 10: Tragstruktur, Durchladeeinrichtung
- 11: Polsterstruktur
- 12: Kopfstützenstruktur
- 10M: Metallstruktur
- 10M-1: erstes Seitenholmprofil
- 10M-1a: Profilschenkel
- 10M-1b: Basisteil
- 10M-1c: Schlossaufnahmeelement
- 10M-2: zweites Seitenholmprofil
- 10M-2a: Profilschenkel
- 10M-2b: Basisteil
- 10M-3: Kopfprofil
- 10M-12: Verbindungsprofil
- 10M-12a: Profilschenkel
- 10M-12b: Basisteil
- 10M-4: Profildraht
- 10M-4a: Auskragung
- 10M-5: Aufnahmehülse
- 10M-6: Einleger
- 10M-7: Halteelement
- 10K-1: Spinnennetz-Struktur
- 10K-1a: erste Spinnennetz-Teilstruktur
- 10K-1b: zweite Spinnennetz-Teilstruktur
- 1a: Zentralrippe
- 1v: vertikale Rippen
- 1h: horizontale Rippen
- 10K-2: Kreuz-Netzstruktur im Verbindungsprofil 10M-12
- 10K-3: Kreuz-Netzstruktur in den Seitenholmprofilen 10M-1, 10M-2
- 10K-4: Dreieck-Netzstruktur des Polsterstruktur-Aufnahmeelementes 10K-41
- 10K-41: Polsterstruktur-Aufnahmeelement

- 10K-5: Kreissegment-Netzstruktur der Aufnahmehülse 10M-5
- 10K-6: Umspritzung Kopfprofil 10M-3
- 10K-7: Grundplatte
- 10K-8: Kopfstützen-Aufnahmen
- P1: erster Anbindungspunkt
- P2: zweiter Anbindungspunkt
- H: Hauptlastlinie
- F: Festpunkt
- y1: horizontale Drehachse
- y2: horizontale Achse
- L: Ladegut
- L1: Pfeilspitze, Aufschlagpunkt
- L2: Pfeilspitze, Aufschlagpunkt
- K: Kreuzungspunkt
- I: Lastfall Frontcrash
- II: Lastfall Heckcrash
- III: Lastfall Kopfaufschlag
- IV: Lastfall Einsitztest
- V: Lastfall Ladegut im Frontcrash I
- T: Tiefe der Rippen 1v, 1h in x-Richtung
- -x: Richtung in der üblichen Fahrtrichtung eines Fahrzeugs
- +x: Richtung entgegen der üblichen Fahrtrichtung +x
- y: Richtung in der Horizontalen quer zur x-Richtung
- z: Richtung in der Vertikalen quer zur x-Richtung

## Patentansprüche

1. Hybrid-Tragstruktur (10) für ein Rückenlehnenteil eines Fahrzeugsitzes (101, 102) oder einer Rücksitzbank (100), die aus einer Metallstruktur (10M) und einer Kunststoffstruktur (10K) ausgebildet ist, wobei die Metallstruktur (10M) mindestens ein zwischen zwei Seitenholmprofilen (10M-1, 10M-2) der Hybrid-Tragstruktur (10) angeordnetes Verbindungsprofil (10M-12) aufweist, wobei das Verbindungsprofil (10M-12) gemeinsam mit einer Zentralrippe (1a) einer als Kunststoffstruktur (10K) ausgebildeten Netzstruktur (10K-1) einer lastpfadoptimierten Hauptlastlinie (H) folgt, die unter Berücksichtigung einer in mindestens einem angenommenen Lastfall (I, II, III, IV, V) an der Hybrid-Tragstruktur (10) angreifenden Kraft zwischen zwei Anbindungspunkten (P1, P2) des Verbindungsprofils (10M-12) an den Seitenholmprofilen (10M-1, 10M-2) verläuft, **dadurch gekennzeichnet, dass** die Metallstruktur (10M) und die Kunststoffstruktur (10K) in einem Spritzgießverfahren zu der Hybrid-Tragstruktur (10) verbunden sind, wobei die Metallstruktur (10M) ein Zusammenbauteil aus mehreren metallischen Bauteilen (10M-1, 10M-2, 10M-3, 10M-4, 10M-5, 10M-6, 10M-7) ist, wobei die metallischen mehreren Bauteile, die zunächst zu dem metallischen Zusammenbauteil zusammengeführt sind, in dem Spritzgießverfahren über die gleichzeitig einteilig ausgebildete Kunststoffstruktur (10K) miteinander verbunden sind.

2. Hybrid-Tragstruktur (10) nach Anspruch 1, **dadurch gekennzeichnet, dass** die Netzstruktur (10K-1) der Kunststoffstruktur (10K) eine unregelmäßige Spinnennetz-Struktur ist, die sowohl die Zentralrippe (1a) und von der Zentralrippe (1a) ausgehend im Wesentlichen horizontale Rippen (1h) und im Wesentlichen vertikale Rippen (1v) umfasst, die über Kreuzungspunkte (K) miteinander verbunden sind.

3. Hybrid-Tragstruktur (10) nach Anspruch 2, **dadurch gekennzeichnet, dass** sich eine aufgespannte Ebene der Spinnennetz-Struktur (10K-1) zwischen den seitlichen Seitenholmprofilen (10M-1, 10M-2) der Hybrid-Tragstruktur (10) und zwischen den zu der Kunststoffstruktur (10K) gehörenden Kopfstützen-Aufnahmen (10K-8) an einem oberen Ende der Hybrid-Tragstruktur (10) bis zu einer horizontalen Drehachse (y1) an einem unteren Ende der Hybrid-Tragstruktur (10) erstreckt.

4. Hybrid-Tragstruktur (10) nach Anspruch 2, **dadurch gekennzeichnet, dass** die Spinnennetz-Struktur (10K-1) der Kunststoffstruktur (10K) eine erste und zweite Spinnennetz-Teilstruktur (10K-1 a, 10K-1b) aufweist, die auf einer Rückseite der Hybrid-Tragstruktur (10) durchgehend und auf einer Vorderseite der Hybrid-Tragstruktur (10) unterbrochen ausgebildet sind.

5. Hybrid-Tragstruktur (10) nach Anspruch 4, **dadurch gekennzeichnet, dass** sich eine aufgespannte Ebene der ersten Spinnennetz-Teilstruktur (10K-1) zwischen den seitlichen Seitenholmprofilen (10M-1, 10M-2) der Hybrid-Tragstruktur (10) und zwischen zu der Kunststoffstruktur (10K) gehörenden Kopfstützen-Aufnahmen (10K-8) an einem oberen Ende der Hybrid-Tragstruktur (10) bis zu einer horizontalen Achse (y2) erstreckt, die zwischen dem oberen und unteren Ende der Hybrid-Tragstruktur (10) verläuft.

6. Hybrid-Tragstruktur (10) nach Anspruch 4, **dadurch gekennzeichnet, dass** sich eine aufgespannte Ebene der zweiten Spinnennetz-Teilstruktur (10K-1b) zwischen den seitlichen Seitenholmprofilen (10M-1, 10M-2) der Hybrid-Tragstruktur (10) und zwischen der horizontalen Achse (y2) zwischen dem oberen und unteren Ende der Hybrid-Tragstruktur (10) und einer horizontalen Drehachse (y1) an dem unteren Ende der Hybrid-Tragstruktur (10) erstreckt.

7. Hybrid-Tragstruktur (10) nach den Ansprüchen 4 und 6, **dadurch gekennzeichnet, dass** innerhalb der durch die zweite Spinnennetz-Teilstruktur (10K-1b) aufgespannten Ebene ein metallischer Einleger (10M-6) zwischen den seitlichen Seitenholmprofilen (10M-1, 10M-2) angeordnet ist, der die zweite Spinnennetz-Teilstruktur (10K-1b) in eine vorderseitige und eine rückseitige Spinnennetz-Teilstruktur (10K-1b) trennt.

8. Hybrid-Tragstruktur (10) nach Anspruch 1, **dadurch gekennzeichnet, dass** das zwischen den Seitenholmprofilen (10M-1, 10M-2) angeordnete Verbindungsprofil (10M-12) als ein C-Profil ausgebildet ist, welches zwei gegenüberliegende Profilschenkel (10M-12a) aufweist, die sich zur Rückseite der Hybrid-Tragstruktur (10) erstrecken, zwischen denen eine weitere Netzstruktur, als eine Kreuz-Netzstruktur (10K-2) ausgebildet ist, die aus sich kreuzenden Rippen ausgebildet ist, die im Wesentlichen dreieckige Waben oder rechteckige Waben, insbesondere quadratische oder rhombische Waben mit Kreuzungspunkten (K) bilden.

9. Hybrid-Tragstruktur (10) nach Anspruch 1, **dadurch gekennzeichnet, dass** die Seitenholmprofile (10M-1, 10M-2) als C-Profile ausgebildet sind, welche zwei gegenüberliegende Profilschenkel (10M-1a, 10M-2a) aufweisen, die von der Hybrid-Tragstruktur (10) seitlich abstehen, wobei zwischen den Profilschenkeln (10M-1a, 10M-2a) eine weitere Netzstruktur, als Kreuz-Netzstruktur (10K-3) ausgebildet ist, die aus sich regelmäßig kreuzenden Rippen ausgebildet ist, die im Wesentlichen dreieckige Waben oder rechteckige Waben, insbesondere quadratische oder rhombische Waben mit Kreuzungspunkten (K) bilden.

10. Hybrid-Tragstruktur (10) nach Anspruch 1, **dadurch gekennzeichnet, dass** die Kunststoffstruktur (10K) ein Polsterstruktur-Aufnahmeelement (10K-41) umfasst, welches seitlich des Polsterstruktur-Aufnahmeelementes (10K-41) eine weitere Netzstruktur, insbesondere als Dreieck-Netzstruktur (10K-4) aufweist, die aus abgewinkelten Rippen ausgebildet ist, die im Wesentlichen dreieckige Waben mit Kreuzungspunkten (K) bilden.

11. Hybrid-Tragstruktur (10) nach Anspruch 1, **dadurch gekennzeichnet, dass** die Metallstruktur (10M) als Funktionselement einen metallischen Profildraht (10M-4) mit einer Auskragung (10M-4a) aufweist, sodass eine Polsterstruktur (11) an dem aus Kunststoff ausgebildeten Polsterstruktur-Aufnahmeelement (10K-41) und der Auskragung (10M-4a) des metallischen Profildrahtes (10M-4) befestigbar ist.

12. Hybrid-Tragstruktur (10) nach Anspruch 1, **dadurch gekennzeichnet, dass** metallische Aufnahmehülsen (10M-5) in den Seitenholmprofilen (10M-1, 10M-2) der Hybrid-Tragstruktur (10) angeordnet sind, die mit der einteiligen Kunststoffstruktur (10K) fest verbunden sind, wobei die Kunststoffstruktur (10K) Umspritzungen der Aufnahmehülsen (10M-5) aufweist, die jeweils seitlich mit einer weiteren Netzstruktur, insbesondere als Kreissegment-Netzstruktur (10K-5) versehen sind, die aus sich von der horizontalen Drehachse (y1) der Aufnahmehülsen (10M-5) unregelmäßig oder regelmäßig strahlenförmig abgehenden Rippen ausgebildet wird, wodurch die Kreissegment-Netzstruktur (10K-5) kreissegmentförmige Waben ausbildet.

13. Hybrid-Tragstruktur (10) nach Anspruch 1, **dadurch gekennzeichnet, dass** die Metallstruktur (10M) ein metallisches Kopfprofil (10M-3) umfasst, welches mit einer Umspritzung (10K-6) aus Kunststoff als Teil der Kunststoffstruktur (10K) versehen ist.

14. Hybrid-Tragstruktur (10) nach Anspruch 1, **dadurch gekennzeichnet, dass** die Kunststoffstruktur (10K) eine Grundplatte (10K-7) und/oder eine Kopfstützen-Aufnahme (10K-8) umfasst, welche als Teil/e der Kunststoffstruktur (10K) ausgebildet ist/werden.

## Claims

1. Hybrid carrying structure (10) for a backrest part of a vehicle seat (101, 102) or a back seat (100) formed from a metal structure (10M) and a plastic structure (10K), wherein the metal structure (10M) has at least one connecting profile (10M-12) arranged between two side-rail profiles (10M-1, 10M-2) of the hybrid carrying structure (10), wherein the connecting profile (10M-12), together with a central rib (1a) of a mesh structure (10K-1) designed in the form of plastic structure (10K), follows a load-path-optimized main-load line (H) which, taking account of a force acting on the hybrid carrying structure (10) in at least one assumed load case (I, II, III, IV, V), runs between two points of attachment (P1, P2) of the connecting profile (10M-12) to the side-rail profiles (10M-1, 10M-2), **characterized in that** the metal structure (10M) and the plastic structure (10K) are connected in an injection molding process to the hybrid carrying structure (10), wherein the metal structure (10M) is an assembly component made of several metallic components (10M-1, 10M-2, 10M-3, 10M-4, 10M-5, 10M-6, 10M-7), wherein the several metallic components, which, initially, are brought together to form the metallic assembly component, are connected to each other in the injection molding process via the simultaneously integrally-formed plastic structure (10K).

2. Hybrid carrying structure (10) according to claim 1, **characterized in that** the mesh structure (10K-1) of the plastic structure (10K) is an irregular spider-web structure comprising both the central rib (1a) and, starting from the central rib (1a), substantially horizontal ribs (1h) and substantially vertical ribs (1v) interconnected via crossing points (K).

3. Hybrid carrying structure (10) according to claim 2, **characterized in that** a spanned plane of the spider-web structure (10K-1) extends between the lateral side-rail profiles (10M-1, 10M-2) of the hybrid carrying structure (10) and between the headrest receptacles (10K-8), belonging to the plastic structure (10K), at an upper end of the hybrid carrying structure (10) up to a horizontal axis of rotation (y1) at a lower end of the hybrid carrying structure (10).

4. Hybrid carrying structure (10) according to claim 2, **characterized in that** the spider-web structure (10K-1) of the plastic structure (10K) has a first and second spider-web substructure (10K-1a, 10K-1b) which are constructed to be continuous on a rear side of the hybrid carrying structure (10) and discontinuous on a front side of the hybrid carrying structure (10).

5. Hybrid carrying structure (10) according to claim 4, **characterized in that** a spanned plane of the first spider-web substructure (10K-1) extends between the lateral side-rail profiles (10M-1, 10M-2) of the hybrid carrying structure (10) and between the headrest receptacles (10K-8), belonging to the plastic structure (10K), at an upper end of the hybrid carrying structure (10) up to a horizontal axis (y2) running between the upper and lower ends of the hybrid carrying structure (10).

6. Hybrid carrying structure (10) according to claim 4, **characterized in that** a spanned plane of the second spider-web substructure (10K-1b) extends between the lateral side-rail profiles (10M-1, 10M-2) of the hybrid carrying structure (10) and between the horizontal axis (y2) between the upper and lower ends of the hybrid carrying structure (10) and a horizontal axis of rotation (y1) at the lower end of the hybrid carrying structure (10).

7. Hybrid carrying structure (10) according to claims 4 and 6, **characterized in that**, within the plane spanned by the second spider-web substructure (10K-1b), a metallic insert (10M-6) is arranged between the lateral side-rail profiles (10M-1, 10M-2) which separates the second spider-web substructure (10K-1b) into a front-side and a rear-side spider-web substructure (10K-1b).

8. Hybrid carrying structure (10) according to claim 1, **characterized in that** the connecting profile (10M-12) arranged between the side-rail profiles (10M-1, 10M-2) is embodied as a C-profile having two opposing profile legs (10M-12a), extending to the rear side of the hybrid carrying structure (10), between which a further mesh structure is embodied as a cross-mesh structure (10K-2) formed from intersecting ribs which form substantially triangular honeycombs or rectangular honeycombs - in particular, square or rhombic honeycombs with crossing points (K).

9. Hybrid carrying structure (10) according to claim 1, **characterized in that** the side-rail profiles (10M-1, 10M-2) are embodied as C-profiles having two opposing profile legs (10M-1a, 10M-2a) projecting to the side of the hybrid carrying structure (10), wherein a further mesh structure is embodied between the profile legs (10M-1a, 10M-2a) as a cross-mesh structure (10K-3) formed from regularly intersecting ribs which form substantially triangular honeycombs or rectangular honeycombs - in particular, square or rhombic honeycombs with crossing points (K).

10. Hybrid carrying structure (10) according to claim 1, **characterized in that** the plastic structure (10K) comprises an upholstered structure receiving element (10K-41) which has, lateral to the upholstered structure receiving element (10K-41), a further mesh structure - in particular, as a triangular mesh structure (10K-4) - formed from angled ribs which form substantially triangular honeycombs with crossing points (K).

11. Hybrid carrying structure (10) according to claim 1, **characterized in that** the metal structure (10M) has, as a functional element, a metallic profile wire (10M-4) with a projection (10M-4a) so that an upholstered structure (11) can be fastened to the upholstered structure receiving element (10K-41) made of plastic and the projection (10M-4a) of the metallic profile wire (10M-4).

12. Hybrid carrying structure (10) according to claim 1, **characterized in that**, in the side-rail profiles (10M-1, 10M-2) of the hybrid carrying structure (10), metallic receiving sleeves (10M-5) are arranged which are firmly attached to the one-piece plastic structure (10K), wherein the plastic structure (10K) has extrusion coatings of the receiving sleeves (10M-5) which are each provided laterally with a further mesh structure - in particular, as a circular segment mesh structure (10K-5) - formed from ribs that radiate, irregularly or regularly, from the horizontal axis of rotation (y1) of the receiving sleeves (10M-5), whereby the circular segment mesh structure (10K-5) forms circular, segment-shaped honeycombs.

13. Hybrid carrying structure (10) according to claim 1, **characterized in that** the metal structure (10M) comprises a metallic head profile (10M-3) provided with an extrusion coating (10K-6) made of plastic as part of the plastic structure (10K).

14. Hybrid carrying structure (10) according to claim 1, **characterized in that** the plastic structure (10K) comprises a base plate (10K-7) and/or a headrest receptacle (10K-8) which is/are embodied as part(s) of the plastic structure (10K).

## Revendications

1. Structure porteuse hybride (10) pour une partie dossier d'un siège (101, 102) de véhicule ou d'une banquette arrière (100), laquelle structure est formée à partir d'une structure métallique (10M) et d'une structure en plastique (10K), la structure métallique (10M) comprenant au moins un profilé de liaison (10M-12) disposé entre deux profilés de longeron latéral (10M-1, 10M-2) de la structure porteuse hybride (10), le profilé de liaison (10M-12) suivant, conjointement avec une nervure centrale (1a) une structure maillée (10K-1) réalisée en tant que structure en plastique (10K), d'une ligne de charge principale (H) optimisée en termes de chemin de charge, qui s'étend, en prenant en compte une force agissant sur la structure porteuse hybride (10) dans au moins un cas de charge (I, II, III, IV, V) supposé, entre deux points de liaison (P1, P2) du profilé de liaison (10M-12) aux profilés de longeron latéral (10M-1, 10M-2), **caractérisée en ce que** la structure métallique (10M) et la structure en plastique (10K) sont reliées, dans un procédé de moulage par injection, en structure porteuse hybride (10), la structure métallique (10M) étant une pièce assemblée formée de plusieurs pièces métalliques (10M-1, 10M-2, 10M-3, 10M-4, 10M-5, 10M-6, 10M-7), lesdites plusieurs pièces métalliques, qui sont d'abord réunies en pièce assemblée métallique, étant reliées les unes aux autres dans le procédé de moulage par injection par le biais de la structure en plastique (10K) formée simultanément d'une seule pièce.

2. Structure porteuse hybride (10) selon la revendication 1, **caractérisée en ce que** la structure maillée (10K-1) de la structure en plastique (10K) est une structure irrégulière de type toile d'araignée, qui comprend la nervure centrale (1a) et des nervures sensiblement horizontales (1h) et des nervures sensiblement verticales (1v) partant de la nervure centrale (1a) et reliées les unes aux autres par le biais de points de croisement (K).

3. Structure porteuse hybride (10) selon la revendication 2, **caractérisée en ce qu'**un plan sous-tendu de la structure de type toile d'araignée (10K-1) s'étend entre les profilés de longeron latéral (10M-1, 10M-2) de la structure porteuse hybride (10) et entre les logements d'appui-tête (10K-8) appartenant à la structure en plastique (10K) au niveau d'une extrémité supérieure de la structure porteuse hybride (10) jusqu'à un axe de rotation horizontal (y1) au niveau d'une extrémité inférieure de la structure porteuse hybride (10).

4. Structure porteuse hybride (10) selon la revendication 2, **caractérisée en ce que** la structure de type toile d'araignée (10K-1) de la structure en plastique (10K) présente une première et une deuxième structure partielle de type toile d'araignée (10K-1a, 10K-1b), qui sont conçues en continu sur un côté arrière de la structure porteuse hybride (10) et de manière interrompue sur un côté avant de la structure porteuse hybride (10).

5. Structure porteuse hybride (10) selon la revendication 4, **caractérisée en ce qu'**un plan sous-tendu de la première structure partielle de type toile d'araignée (10K-1) s'étend entre les profilés de longeron latéral (10M-1, 10M-2) de la structure porteuse hybride (10) et entre les logements d'appui-tête (10K-8) appartenant à la structure en plastique (10K) au niveau d'une extrémité supérieure de la structure porteuse hybride (10) jusqu'à un axe horizontal (y2) qui s'étend entre l'extrémité supérieure et l'extrémité inférieure de la structure porteuse hybride (10).

6. Structure support hybride (10) selon la revendication 4, **caractérisée en ce qu'**un plan sous-tendu de la deuxième structure partielle de type toile d'araignée (10K-1b) s'étend entre les profilés de longeron latéral (10M-1, 10M-2) de la structure porteuse hybride (10) et entre l'axe horizontal (y2) entre l'extrémité supérieure et l'extrémité inférieure de la structure porteuse hybride (10) et un axe de rotation horizontal (y1) au niveau de l'extrémité inférieure de la structure porteuse hybride (10).

7. Structure porteuse hybride (10) selon les revendications 4 et 6, **caractérisée en ce qu'**un insert métallique (10M-6) est disposé dans le plan sous-tendu à travers la deuxième structure partielle de type toile d'araignée (10K-1b) entre les profilés de longeron latéral (10M-1, 10M-2), lequel insert sépare la deuxième structure partielle de type toile d'araignée (10K-1b) en une structure partielle de type toile d'araignée (10K-1b) côté avant et une structure côté arrière.

8. Structure porteuse hybride (10) selon la revendication 1, **caractérisée en ce que** le profilé de liaison (10M-12) disposé entre les profilés de longeron latéral (10M-1, 10M-2) est conçu comme un profilé en C, qui présente deux branches de profilé (10M-12a) opposées, qui s'étendent vers le côté arrière de la structure porteuse hybride (10), entre lesquelles une autre structure maillée est conçue sous forme d'une structure maillée croisée (10K-2), qui est conçue à partir de nervures se croisant, qui forment des alvéoles sensiblement triangulaires ou rectangulaires, en particulier des alvéoles carrées ou en forme de losange avec des points de croisement (K).

9. Structure porteuse hybride (10) selon la revendication 1, **caractérisée en ce que** les profilés de longeron latéral (10M-1, 10M-2) sont conçus comme des profilés en C, qui présentent deux branches de profilé (10M-1a, 10M-2a) opposées, qui partent latéralement de la structure porteuse hybride (10), une autre structure maillée conçue sous forme d'une structure maillée croisée (10K-3) étant conçue entre les branches de profilé (10M-1a, 10M-2a), laquelle structure est conçue à partir de nervures se croisant régulièrement, qui forment des alvéoles sensiblement triangulaires ou rectangulaires, en particulier des alvéoles carrées ou en forme de losange avec des points de croisement (K).

10. Structure porteuse hybride (10) selon la revendication 1, **caractérisée en ce que** la structure en plastique (10K) comprend un élément de logement (10K-41) d'une structure de rembourrage, qui présente latéralement par rapport à l'élément de logement (10K-41) de la structure de rembourrage une autre structure maillée, en particulier sous forme de structure maillée à triangles (10K-4), qui est conçue à partir de nervures coudées qui forment des alvéoles sensiblement triangulaires avec des points de croisement (K).

11. Structure porteuse hybride (10) selon la revendication 1, **caractérisée en ce que** la structure métallique (10M) présente en tant qu'élément fonctionnel un fil profilé métallique (10M-4) pourvu d'une saillie (10M-4a) de telle sorte qu'une structure de rembourrage (11) puisse être fixée à l'élément de logement (10K-41) en plastique de la structure de rembourrage et à la saillie (10M-4a) du fil profilé métallique (10M-4).

12. Structure porteuse hybride (10) selon la revendication 1, **caractérisée en ce que** des manchons métalliques de logement (10M-5) sont agencés dans les profilés de longeron latéral (10M-1, 10M-2) de la structure porteuse hybride (10), lesquels manchons sont reliés de manière fixe à la structure en plastique d'une seule pièce (10K), la structure en plastique (10K) présentant des surmoulages des manchons de logement (10M-5), lesquels surmoulages sont à chaque fois pourvus latéralement d'une autre structure maillée, en particulier sous forme de structure maillée à segments de cercle (10K-5), qui est conçue à partir de nervures partant sous forme de rayons réguliers ou irréguliers de l'axe de rotation horizontal (y1) des manchons de logement (10M-5), moyennant quoi la structure maillée à segments de cercle (10K-5) forme des alvéoles en forme de segment de cercle.

13. Structure porteuse hybride (10) selon la revendication 1, **caractérisée en ce que** la structure métallique (10M) comprend un profilé métallique de tête (10M-3) qui est pourvu d'un surmoulage (10K-6) en plastique en tant que partie de la structure en plastique (10K).

14. Structure porteuse hybride (10) selon la revendication 1, **caractérisée en ce que** la structure en plastique (10K) comprend une plaque de base (10K-7) et/ou un logement d'appui-tête (10K-8) qui est/sont conçu(e)(s) comme partie(s) de la structure en plastique (10K).
